# EUROPÄISCHE PATENTSCHRIFT

(11) **EP 2 031 338 B1**
(45) Veröffentlichungstag und Bekanntmachung des Hinweises auf die Patenterteilung: **06.12.2017**
(21) Anmeldenummer: 08012842.4
(22) Anmeldetag: 16.07.2008
(51) Int. Cl.: F28F 21/04, F28F 9/02

(54) **Wärmetauscher**
Heat exchanger
Echangeur thermique

(30) Priorität: 28.08.2007 DE 102007040793
(43) Veröffentlichungstag der Anmeldung: 04.03.2009
(73) Patentinhaber: MAHLE Behr GmbH & Co. KG, 70469 Stuttgart (DE)
(72) Erfinder: Hemminger, Roland, 73733 Esslingen (DE); Schienemann, Mark, 71686 Remseck (DE); Reier, Wolfgang, 71409 Schwaikheim (DE)
(74) Vertreter: Grauel, Andreas

(56) Entgegenhaltungen:
- EP-A1- 1 154 143
- EP-A1- 1 544 564
- EP-A1- 1 710 526
- DE-A1- 2 703 528
- FR-A1- 2 251 794
- JP-A- 2007 077 839
- US-A- 1 599 370
- US-A- 2 512 748
- US-A- 2 783 980
- US-A1- 2004 134 640

## Beschreibung

Die Erfindung betrifft einen Wärmetauscher zum Wärmetausch zwischen einem ersten Fluid und einem zweiten Fluid aufweisend: einen Block zur voneinander getrennten und wärmetauschenden Führung des ersten und zweiten Fluids, welcher Block eine Anzahl von dem ersten Fluid durchströmbare Strömungskanäle und ein die Strömungskanäle aufnehmendes, von dem zweiten Fluid durchströmbares Gehäuse aufweist; mindestens einen Kastendeckel, welcher mit den Strömungskanälen strömungsverbunden ist; einen Boden, der am Deckel festgelegt ist und mit einer oder mehreren Durchgangsöffnungen für Strömungskanäle versehen ist. Die Erfindung betrifft weiter eine Verwendung des Wärmetauschers.

Bei einem bekannten Wärmetauscher kann ein Kastendeckel aus tiefgezogenem Blech ausgeführt werden, der beim Herstellungsprozess mit dem Block verlötet wird. Dies hat zwar Vorteile im Hochtemperaturbereich, jedoch müssen Anbauelemente wie z.B. Halter oder Flansche für Sensoren als Zusatzteile aus Blech hergestellt werden und mit dem Kastendeckel vor dem Löten verbunden werden, was den Herstellungsprozess komplizierter macht. Darüber hinaus kann eine aufwendigere Kastenform in der Regel nicht mehr als Tiefziehteil hergestellt werden, so dass in diesem Fall eine Gussfertigung erfolgen muss und der Kastendeckel in der Regel an den Block angeschweißt werden muss. Diese Art eines Kastens erweist sich gerade bei aufwendigeren Bauformen als vergleichsweise teuer und aufwendig in der Herstellung.

Eine kostengünstige Alternative zu solchen Wärmetauschem ist ein Wärmetauscher der eingangs genannten Art, bei dem der Kasten einen Kastendeckel aus Kunststoff aufweist. Hier können vergleichsweise komplexe Bauformen realisiert werden, wobei mit entsprechenden Kunststoffmaterialien und einer entsprechenden Auslegung des Kastens durchaus auch höhere Temperaturenbereiche realisiert werden können. Beispiele von Kastendeckeln aus Kunststoff sind in DE 10 2004 051 207 A1 und DE 10 2004 047 901 A1 angegeben.

Grundsätzlich gibt es unterschiedliche Arten einen Kunststoffkastendeckel am Wärmetauscher anzubringen, so beispielsweise Anbindungen wie sie in WO 2004/09457, Fig. 2 oder DE 199 53 785 A1, Fig. 4 gezeigt sind.
DE 10 2005 012 761 A1 offenbart einen eingangs genannten Wärmetauscher mit einem Gehäuse aus zwei Seitenteilen und zwei Gehäusedeckeln, wobei die Seitenteile am Block verlötet sind und die Gehäusedeckel mit den Seitenteilen verschweißt sind. Des Weiteren werden Sammelkästen aus Kunststoff unter Zwischenfügung einer Dichtung mit Rohrböden mechanisch verbunden. Die mechanische Verbindung wird durch das Umbiegen von Laschen der Rohrböden auf den Rand des Sammelkastens erledigt. Diese Art eines Wärmetauschers ist noch verbesserungswürdig.

Die US 2,783,980 offenbart einen Wärmetauscher mit einem zweiteiligen Rohrboden umfassend ein inneres Bodenteil, das der der Aufnahme der Rohre dient, und ein äußeres Bodenteil, das zur Befestigung des Rohrbodens dient.

Wünschenswert ist eine in der Herstellung vergleichsweise einfache Auslegung eines Wärmetauschers, bei dem gleichwohl vergleichsweise komplexe Bauformen realisiert werden können. Insbesondere betrifft dies die Auslegung eines Bodens des Wärmetauschers.

Wünschenswert ist eine weiter vorteilhaft verbesserte Anbindung eines Kastendeckels, insbesondere eines Kastendeckels aus einem Nichtmetallmaterial an einem Metallteil, am Boden eines Wärmetauschers, vorzugsweise unter Berücksichtigung einer verbesserten Dichtwirkung. Wünschenswert ist auch eine Verbesserung eines Gehäuses des Wärmetauschers.

An dieser Stelle setzt die Erfindung an, deren Aufgabe es ist, einen Wärmetauscher anzugeben, bei dem der Boden in verbesserter Weise ausgelegt ist. Insbesondere soll ein Boden vergleichsweise einfach herstellbar sein. Vorzugsweise soll der Kastendeckel eines Kastens besonders vorteilhaft am Boden angebunden sein, insbesondere soll ein Kastendeckel aus einem Nichtmetallmaterial, am Metallboden vorteilhaft angebunden sein, vorzugsweise unter Verbesserung einer Dichtwirkung. Insbesondere ist es eine weitere Aufgabe der Erfindung einen Wärmetauscher mit einem verbesserten Gehäuse anzugeben.

Die Aufgabe wird gelöst durch einen Wärmetauscher mit den Merkmalen des Anspruchs 1. Es ist bekannt, dass ein zweiteiliger Boden vorteilhaft ausgelegt werden kann und ein zweiteiliges Bodenkonzept zu einer vereinfachten Herstellung des Bodens und gleichzeitig zu einer höheren Prozesssicherheit bei der Herstellung führt. Einerseits sollte der Boden für einen guten Kassettierprozess und z.B. auch für eine gute Verlötung von Boden und Strömungskanälen, im Bereich der Durchgangsöffnungen für die Strömungskanäle, insbesondere in einem inneren Bereich, vergleichsweise dickwandig ausgeführt sein. Andererseits kann es vorteilhaft sein, den Boden im Vergleich dazu, insbesondere zur Festlegung eines Kastendeckels am Boden durch eine Wellschlitzbördelung, in einem Festlegungsbereich, insbesondere äußeren Bereich, dünnwandiger auszuführen. Dies hat den Vorteil, dass Bauraum gespart werden kann und Verschließkräfte vergleichsweise gering gehalten sind. Durch einen entsprechenden Stanzprozess kann das Material zur Bildung einer Festlegungsstruktur weggedrückt werden. Durch die Materialreduzierung, z.B. im Randbereich eines Bodens, kann eine Kastendeckelbefestigung mit deutlich weniger Bauraumbedarf ausgeführt werden. Ausgehend von dieser Überlegung ist es im Stand der Technik bekannt, dass bei starken Materialreduzierungen, z.B. im Bereich einer Wellschlitzbördelung - es versteht sich, dass ähnliches bei anderen insbesondere mechanischen Verbindungsarten, wie z.B. Schraubverbindungen, gilt - die nötigen Presskräfte zur Materialreduzierung oder mechanischen Verbindungskräfte überraschend stark ansteigen, so dass im Rahmen einer Herstellung die aufzuwendenden Kräfte vergleichsweise hoch sind und/oder im schlimmsten Fall, eine sichere Anbindung eines Kastendeckels am Boden nicht mehr gewährleistet ist. Grundsätzlich führt dies zu einer vergleichsweise unwirtschaftlicheren Fertigung. Dieses erkennend schlägt der Stand der Technik vor, einen Boden aus einem ersten Bodenteil und einem zweiten Bodenteil zusammenzusetzen. Vorzugsweise ist ein erstes Bodenteil zur Ausbildung eines Bereichs für Durchgangsöffnungen von Strömungskanälen ausgebildet. Zusätzlich oder alternativ ist vorzugsweise ein zweites Bodenteil zur Anbindung des Kastendeckels ausgebildet. Dies hat den Vorteil, dass der Bereich für, beispielsweise als Rohrdurchzüge ausgestaltete, Durchgangsöffnungen unabhängig von einem Bereich einer Kastendeckelanbindung gestaltet werden kann und deshalb für verschiedene Wärmetauschausführungen, z. B. für verschiedene indirekte Ladeluftkühler, verwendet werden kann. Das zweite Bodenteil, z.B. der Außenbereich des Bodens, kann dann - angepasst an unterschiedlichste Ausführungen und Materialstärken für die jeweilige Applikation - an den ersten Bodenteil, z.B. der Innenbereich des Bodens, vorzugsweise angetoxt werden. So können beispielsweise unterschiedliche Materialen und Materialstärken problemlos kombiniert werden.

Des weiteren ergibt sich der Vorteil, dass Zusatzteile praktisch kostenneutral im Luftkasten integriert werden können und bei komplexen Luftkastengeometrien ist es nicht mehr notwendig Gusskästen einzusetzen - es können Kunststoffkästen verwendet und vorteilhaft am Boden oder am ersten und/oder zweiten Bodenteil je nach Bedarf zweckmäßig angebunden, vorzugsweise mechanisch festgelegt werden. Darüber hinaus ist das bei einteiligen Böden oft auftretende Gefahrpotenzial einer Vorschädigung des Materials oder einer fertigungsbedingten nicht gewollte Materialausdünnungen vergleichsweise gering. Vorgenannte Vorschädigungen oder Materialausdünnungen können zu einem vorzeitigen Ausfall des Wärmetauschers führen, bzw. vergleichsweise große Materialunterschiede an einem einteiligen Boden lassen sich nicht immer kostengünstig herstellen. Bei dem hier vorgeschlagenen Konzept eines zweiteiligen oder mehrteiligen Bodens wird diese Gefahr durch Vorschädigung deutlich reduziert, da die Bodenherstellung deutlich einfacher gelingt und dies zudem kostenneutral darstellbar ist. Selbst große Materialunterschiede - sei es die Art des Materialbedarfs oder eine Dicke des Materials oder andere Materialparameter - lassen sich somit kombinieren und u.a. Vorteile beim Bauraum erreichen.

Es hat sich als besonders bevorzugt erwiesen, dass - wie beispielhaft erläutert - das erste Bodenteil und das zweite Bodenteil mechanisch aneinander festgelegt sind. Darüber hinaus hat es sich im Rahmen einer besonders bevorzugten Weiterbildung als besonders vorteilhaft erwiesen, dass ein Kastendeckel am Boden über eine oder mehrere mechanische Verbindungen festgelegt ist. Als besonders bevorzugte Weiterbildungen lässt sich eine mechanische Verbindung als Schraubverbindung realisieren, die nachfolgend als erste Variante bezeichnet wird. Darüber hinaus eignet sich allein oder in Kombination auch eine als zweite Variante bezeichnete mechanische Verbindung in Form einer Schlitzbördelung. Als besonders vorteilhaft hat sich das erfindungsgemäße Konzept für den Fall erwiesen, dass der Kastendeckel und der Boden bzw. im Einzelfall auch Bodenteile aus unterschiedlichen Materialen bestehen.

Die Erfindung geht in der oben genannten Weiterbildung von der Überlegung aus, dass eine Anbindung eines Kastendeckels, insbesondere aus Nichtmetall, beispielsweise einem Kunststoff, Faserverbundstoff oder einer Keramik, vergleichsweise sicher sein sollte und zum anderen ausreichend flexibel hinsichtlich thermischer Relativbewegungen des Bodens, der vorzugsweise aus Metall, z.B. Aluminium besteht, und des Kastendeckels ist. Die Weiterbildung hat erkannt, dass sich zu diesem Zweck insbesondere eine Schraubverbindung oder eine Schlitzbördelung oder eine Kombination einer Schraubverbindung mit einer Schlitzbördelung in überlegener Weise gegenüber bekannten Anbindungsarten eignet. Eine Anbindungsart gemäß dem Konzept der Weiterbildung ermöglicht somit eine besonders kosteneffektive Anbindung eines Kastendeckels, z. B. aus Metall, insbesondere aber aus Nichtmetall, an eine ansonsten metallische Bauweise eines Wärmetauschers, so dass insbesondere auch komplexere Kastenformen unter Vermeidung aufwendigerer Herstellungsverfahren ermöglicht sind.

Ein Wärmetauscher der eingangs genannten Art kann insbesondere als ein Ladeluft-Wärmetauscher, bei dem das erste Fluid eine Ladeluft ist, oder als ein Abgas-Wärmetauscher, bei dem das erste Fluid ein Abgas ist, gebildet sein. Das erste Fluid kann auch ein Abgas-Ladeluft-Gemisch oder dergleichen Fluid zum Aufladen einer Verbrennungs-Kraftmaschine sein. Das zweite Fluid, insbesondere ein Kühlmittel, ist beispielsweise ein wasserbasiertes oder anderes zweckmäßiges Kühlmittel.

Als eine besonders bevorzugte Weiterbildung der Erfindung hat sich ein Wärmetauscher in Form eines Ladeluftwärmetauschers, insbesondere eines Ladeluftkühlers erwiesen, der die Merkmale gemäß dem Konzept der Erfindung aufweist. Die oben aufgeführten Probleme haben sich nämlich insbesondere bei Luftkästen ergeben, wobei aufgrund von Bauraumengpässen in der Fahrzeugfront sich in diesem Bereich die indirekte Ladeluftkühlung zunehmend durchsetzt. In diesem Zusammenhang führt eine Weiterbildung in besonders bevorzugter Weise auf die Verwendung des Wärmetauschers gemäß dem Konzept der Erfindung als Ladeluftkühler zur indirekten Kühlung von Ladeluft in einem Ladeluftsystem für eine Brennkraftmaschine eines Kraftfahrzeugs.

Darüber hinaus lässt sich das erfinderische Konzept auch bei einem Wärmetauscher realisieren, wie er in der angemeldeten, noch nicht offengelegten deutschen Patentanmeldung der Anmelderin mit dem Aktenzeichen *04-B-102* C beschrieben ist. Dort ist ein Wärmetauscher der eingangs genannten Art angegeben, bei dem der Boden wenigstens eine erste Nut aufweist, in welche sich der Kastendeckel bzw. ein Wandabschnitt des Kastendeckels des Kastens erstreckt. Unter einem Kasten ist vorliegend insbesondere der Kastendeckel, eine Dichtung und gegebenenfalls der Boden zu verstehen. Die Unterlagen der genannten Anmeldung werden durch diese Referenz hiermit in den Offenbarungsgehalt dieser Anmeldung aufgenommen. Es hat sich gezeigt, dass sich das Verbindungskonzept einer Schraubverbindung und/oder einer Schlitzbördelung zwischen Kastendeckel und Boden in besonders vorteilhafter Weise bei dem in der genannten Anmeldung beschriebenen Wärmetauscher realisieren lässt.

Weitere Vorteile des Konzepts der Erfindung ergeben sich im Rahmen vorteilhafter Weiterbildungen der Erfindung, die den Unteransprüchen zu entnehmen sind.

Vorzugsweise ist das erste Bodenteil - wie oben bereits erwähnt - als ein inneres Bodenteil und das zweite Bodenteil als ein äußeres Bodenteil gebildet, wobei vorzugsweise das innere Bodenteil umfänglich vom äußeren Bodenteil umgeben ist. Dadurch lässt sich in besonders bevorzugter Weise das erste Bodenteil zur Bildung von Durchgangsöffnungen für Strömungskanäle auslegen und das zweite Bodenteil zur vorzugsweise mechanischen Festlegung eines Kastendeckels am Bodenteil auslegen.

Grundsätzlich ist das erste Bodenteil in Form einer oder mehrerer die eine oder mehreren Durchgangsöffnungen aufweisende Bodenplatte gebildet. Die Bodenplatte kann auch eine Vielzahl von Durchgangsöffnungen aufweisen, beispielsweise einreihig angeordnete Durchgangsöffnungen in einer bevorzugten ersten Abwandlung. In einer zweiten Abwandlung können auch zweireihig angeordnete Durchgangsöffnungen bevorzugt sein. Im Prinzip sind auch mehr als zweireihig gebildete Durchgangsöffnungen möglich. Erfindungsgemäß ist der Bereich der Durchgangsöffnungen dickwandiger ausgebildet als ein Bodenplattenrandbereich. Dazu weist die Bodenplatte eine sich über einen Bodenplattenrandbereich erhebendes Podest auf. Eine Durchgangsöffnung ist vorzugsweise in Form einer ein Flachrohr aufzunehmenden Durchgangsöffnung, insbesondere im Wesentlichen rechteckig, gebildet.

Das zweite Bodenteil ist ein Bodenrahmenteil, das in einem Querschnitt im Wesentlichen L-förmig ausgebildet ist. Das Bodenrahmenteil kann in einer besonders bevorzugten Ausführungsform in Form eines oder mehrerer Rahmenteile gebildet sein. Das Bodenrahmenteil ist besonders geeignet zur Festlegung, beispielsweise mechanischen Arretierung eines Kastendeckels, beispielsweise durch eine Schlitzbördelung und/oder eine Schraubverbindung.

Ein praktisch in einer Ebene der Bodenplatte liegender Schenkel des L-förmigen Querschnitts kann wenigstens eine Sicke aufweisen. Eine solche Sicke hat sich als besonders geeignet zur Aufnahme einer Stirnkante eines Wandteils eines Kastendeckels erwiesen. In einer weiteren bevorzugten Ausführungsform können auch zwei Sicken, insbesondere auf unterschiedlichen Seiten gebildete Sicken am Bodenrahmenteil vorgesehen sein. Die andere zusätzlich zur vorgenannten Sicke gebildete Sicke dient bevorzugt zur Aufnahme eines Wandbereichs eines Gehäuseteils, mit anderen Worten zur Aufnahme eines Gehäuserandes.

Vorzugsweise weist ein in einem quer zur Ebene der Bodenplatte liegender Schenkel des L-förmigen Querschnitts wenigstens ein Langloch auf, dass die Bildung einer Schlitzbördelung erlaubt. Dazu eignen sich insbesondere vollumfänglich umlaufend beabstandete Langlöcher, welche beispielsweise gestanzt sind. In einer Abwandlung können solche Langlöcher im Prinzip auch in einem zweiten Bodenteil mit einem L-förmigen Querschnitt vorgesehen sein.

Grundsätzlich kann das erste Bodenteil und das zweite Bodenteil unterschiedliche Materialien oder auch gleiche Materialien aufweisen. Besonders vorzugsweise ist vorgesehen, dass das erste Bodenteil und das zweite Bodenteil unterschiedliche Materialparameter, insbesondere unterschiedliche Materialstärken, aufweisen. Das Konzept der Erfindung hat - wie oben erläutert - erkannt, dass für die Festlegung der Strömungskanäle in Durchgangsöffnungen des ersten Bodenteils und für die Anbindung des Kastendeckels bzw. insbesondere die Arretierung eines Kastendeckels durch das zweite Bodenteil unterschiedliche Materialstärken zu bevorzugen sind. Dieser Vorteil wird dem erfinderischen Konzept folgend gemäß der vorliegenden Weiterbildung besonders gut realisiert.

Das erste und zweite Bodenteil können über eine oder mehrere stoffschlüssige Verbindungen aneinander festgelegt sein. Es eignen sich beispielsweise Löt oder Schweißverbindungen. In einer besonders bevorzugten Weiterbildung ist jedoch vorgesehen, dass das erste und zweite Bodenteil über eine oder mehrere mechanische, insbesondere formschlüssige Verbindungen aneinander festgelegt sind. In einer ganz besonders bevorzugten Weiterbildung sind die Bodenteile aneinander getoxt. Es hat sich überraschend gezeigt, dass solche oder andere einfache mechanische Anbindungsarten die Bodenteile dennoch ausreichend sicher aneinander festlegen.

Darüber hinaus lässt sich der Kastendeckel am Boden über eine oder mehrere stoffschlüssige Verbindungen festlegen - auch hier eignen sich insbesondere Löt oder Schweißverbindungen. Darüber hinaus hat es sich jedoch als besonders bevorzugt erwiesen, dass der Kastendeckel am Boden über eine oder mehrere mechanische, insbesondere formschlüssige, Verbindungen festgelegt ist - in besonders bevorzugter Weise - wie oben bereits erläutert - als eine oder mehrere Schraubverbindung/en und/oder Schlitzbördelung/en.

Vorteilhaft besteht der Boden aus einem Metall, insbesondere aus Aluminium. Dabei ist eine ausreichende Thermostabilität als auch eine vorteilhafte Anbringung der Strömungskanäle in den Durchgangsöffnungen des Bodens ermöglicht.

Um eine weiter verbesserte dichte Anbindung des Kastendeckels zu gewährleisten, sieht eine besonders bevorzugte Weiterbildung vor, dass zwischen dem Boden und dem Kastendeckels eine Dichtung festgelegt ist.

In besonders vorteilhafter Weise ist vorgesehen, dass der Boden und/oder der Kastendeckel eine Sicke aufweist, die vorteilhaft zur Aufnahme der Dichtung ausgelegt ist. Insbesondere ist die Sicke in einem Bodenrandbereich und/oder einem Kastendeckelrandbereich angeordnet.

Im Rahmen der zuvor genannten Weiterbildungen hat es sich als besonders effektiv bei einer Abdichtung des Kastens erwiesen, dass sich eine Stirnseite des Kastendeckels bzw. eines Wandabschnitts des Kastendeckels und/oder des Bodens entlang der Sicke erstreckt.

Die zuvor genannten Weiterbildungen eignen sich, vorzugsweise zur. Verbesserung eines Dichtverhaltens, in besonderer Weise dazu, den Boden und den Kastendeckel relativ zueinander - in einer Sicke - festzulegen. Wahlweise können eine oder mehrere Sicken am Kastendeckel angeordnet sein. Vorteilhaft erstreckt sich dann eine Stirnseite des Bodens entlang der Sicke. Vorzugsweise sind eine oder mehrere Sicken am Boden angeordnet und vorteilhaft erstreckt sich eine Stirnseite des Kastendeckels entlang der Sicke. Mit anderen Worten, es werden in besonders vorteilhafter Abgrenzung zum Stand der Technik eine oder mehrere Sicken genutzt, um eine verbesserte und dichtere Festlegung von Boden und Kastendeckel relativ zueinander zu erreichen.

Gemäß einer besonders bevorzugten ersten Abwandlung ist vorgesehen, dass der Kastendeckel bzw. ein Wandabschnitt des Kastendeckels und/oder des Bodens mit einer Stirnseite stumpf auf den Boden stößt, insbesondere derart, dass die Stirnseite die Sicke übergreift. Mit anderen Worten, die Breite der Stirnseite ist größer als die Breite der Sicke.

Die vorgenannte, erste Abwandlung der Erfindung hat sich, insbesondere in Bezug auf eine Schraubverbindung, als besonders effektiv, insbesondere hinsichtlich ihres Dichtverhaltens, erwiesen, ist aber nicht beschränkt darauf.

Grundsätzlich kann eine Realisierung der Schraubverbindung auf unterschiedlichste Art und Weise erfolgen. Eine Weiterbildung der Erfindung sieht vor, die Schraubverbindung besonders sicher auszugestalten. Im Rahmen des Konzepts der Erfindung hat sich insbesondere eine Weiterbildung als vorteilhaft erwiesen, bei welcher der Boden eine Anzahl von Augen zur Aufnahme jeweils einer Schraubverbindung aufweist. Ein Auge kann insbesondere an einer Ecke und/oder an einer Seite des Bodens angeordnet sein. Als besonders effektiv hat sich die Anbringung von acht Augen - jeweils eins auf einer Ecke und Seite des Bodens - erwiesen. Ganz allgemein können zwei benachbarte Augen einen Abstand aufweisen, der im Bereich zwischen 40 bis 90 mm liegt, vorzugsweise zwischen 50 bis 70 mm liegt. Grundsätzlich hängt die Anzahl der Augen von den Abmessungen des Bodens ab. Die genannten Abstandsbereiche haben sich als besonders vorteilhaft für bevorzugte Bodenabmessungen erwiesen und bilden einen zweckmäßigen Kompromiss zwischen Stabilität und Materialaufwand.

Der Herstellungsprozess lässt sich vereinfachen, wenn eine Setzmutter am Boden oder am Kasten zur Bildung der Schraubverbindung vorgesehen ist.

Gemäß einer besonders bevorzugten zweiten Abwandlung ist vorgesehen, dass eine Stirnseite des Deckels bzw. eines Wandabschnitts des Deckels und/oder des Bodens in eine Sicke eingreift. Die zweite Abwandlung hat sich als besonders effektiv im Rahmen einer Schlitzbördelung, vorzugsweise für eine Wellschlitzbördelung, erwiesen, ist aber nicht beschränkt darauf. Dadurch lässt sich eine besonders vorteilhafte Dichtwirkung erzielen und die Schlitzbördelung lässt sich besonders bauraumsparend einsetzen. Die Schlitzbördelung ist vorteilhaft als Wellschlitzbördelung ausgebildet, da sich diese als zuverlässig erwiesen hat und im Rahmen bisheriger Fertigungskonzepte liegt.

In einer besonders bevorzugten Weiterbildung der Erfindung hat sich die Möglichkeit einer Materialeinsparung dadurch ergeben, dass vorteilhaft eine Bodendicke radial nach außen über eine Sicke hinweg verringert ist. Vorzugsweise ist die Bodendicke wenigstens am Sickengrund geringer als an einer entlang des Radius weiter innenliegenden Stelle des Bodens. Entsprechend sind die Verschleißkräfte für die Schlitzbördelung bzw. Wellschlitzbördelung aufgrund der verringerten Materialstärke geringer als bei anderen Bauformen. Ein besonders vorteilhafter Kompromiss zwischen Materialaufwand und Stabilität ergibt sich, wenn das Verhältnis einer größten Bodendicke zu einer geringsten Bodendicke im Bereich zwischen 2:1 und 4:1 liegt.

Vorzugsweise ist der Boden am Gehäuse festgelegt, beispielsweise durch eine stoffschlüssige oder mechanische oder andere für die Festlegung des Bodens geeignete Verbindung des Bodens mit dem Gehäuse. Insbesondere nimmt der Boden die Strömungskanäle in der einen oder den mehreren Durchgangsöffnungen auf. Dadurch ist eine ausreichende Halterung der Strömungskanäle am Boden gewährleistet und der Block in besonders vorteilhafter Weise im Gehäuse angeordnet.

Vorzugsweise weist das Gehäuse sich entlang einer Strömungsrichtung erstreckende Seitenwände auf und ist mehrteilig gebildet. Dies ermöglicht eine besonders einfache Assemblierung des Blocks im Gehäuse und des Wärmetauschers insgesamt. Es hat sich gezeigt, dass es gemäß der Weiterbildung besonders vorteilhaft ist, dass wenigstens ein Gehäuseteil eine Gehäusekante ausbildet, d.h. einstückig ausbildet. Dadurch lassen sich Undichtigkeiten durch Verbindungsstellen von Gehäuseteilen an einer Gehäusekante vermeiden und die Assemblierung des Gehäuses ist erheblich erleichtert. Vorzugsweise bildet wenigstens ein Gehäuseteil wenigstens bereichsweise eine erste und eine zweite, winklig zueinander ausgerichtete Seitenwand einstückig aus. Dies hat den Vorteil, dass im Unterschied zum Stand der Technik Gehäuseseitenwände nicht mehr separat zur Verfügung gestellt werden müssen, sondern in einem einzigen Gehäuseteil einstückig bereitgestellt werden. Insbesondere verringert dies die Anzahl der Gehäuseteile.

Vorzugsweise ist gemäß einer ersten Abwandlung wenigstens ein Gehäuseteil U-förmig ausgebildet, beispielsweise zur Bereitstellung einer Deckwand sowie wenigstens eines Teils einer ersten Seitenwand und wenigstens eines Teils einer zweiten Seitenwand des Gehäuses. Vorzugsweise ist das Gehäuse aus zwei U-förmigen Gehäuseteilen gebildet. Besonders bevorzugt sind die zwei Gehäuseteile gegenstückig gebildet, so dass mit ihnen ein gesamter Gehäusemantel auf einfache Weise gebildet werden kann. Insbesondere kann es vorteilhaft sein, die beiden U-förmigen Gehäuseteile symmetrisch bzw. praktisch identisch zu bilden, was den Herstellungsprozess erheblich vereinfacht. Vorzugsweise zur Bildung eines Gehäusemantels, und insbesondere im Falle von U-förmig ausgebildeten Gehäuseteilen, ist eine Trennkante von Gehäuseteilen im Bereich einer Seitenwand angeordnet.

In einer zweiten Abwandlung hat es sich als vorteilhaft erwiesen, dass wenigstens ein Gehäuseteil L-förmig gebildet ist, beispielsweise als eine mit dem einstückigen Gehäuseteil gebildete Deckwand und Seitenwand des Gehäuses. Insgesamt kann das Gehäuse aus zwei L-förmigen Gehäuseteilen gebildet sein. Insbesondere sind die beiden L-förmigen Gehäuseteile gegenstückig gebildet bzw. weitgehend symmetrisch oder identisch, was den Herstellungsaufwand erheblich reduziert. Vorzugsweise im Rahmen der zweiten Abwandlung hat es sich als vorteilhaft erwiesen, eine Trennkante von Gehäuseteilen im Bereich einer Gehäusekante anzuordnen.

Im Rahmen einer bevorzugten Weiterbildung der Erfindung weist der Block eine erste Anordnung und eine zweite Anordnung von Strömungskanälen auf, wobei die erste Anordnung und die zweite Anordnung auf gegenüberliegenden Seiten eines Zwischenbodens angeordnet sind. Dadurch ist die Integrität und Stabilität des Wärmetauschers erheblich verbessert und dennoch lässt sich ein vergleichsweise großer Strömungsquerschnitt für das erste Fluid, beispielsweise ein Abgas oder eine Ladeluft, zur Verfügung stellen.

Ein Zwischenboden kann parallel zu und/oder im Wesentlichen in einer durch die Trennkanten von Gehäuseteilen aufgespannten Ebene angeordnet sein. Dies hat sich insbesondere bei U-förmig gebildeten Gehäuseteilen als vorteilhaft erwiesen, bei denen eine Trennkante im Bereich einer Seitenwand angeordnet ist. Dies ermöglicht vorteilhaft die Anordnung eines Zwischenbodens praktisch mittig und parallel zu den Seitenwänden und in der von den Trennkanten der U-förmigen Gehäuseteile aufgespannten Ebene.

Grundsätzlich ist es im Rahmen der vorgenannten Weiterbildung vorteilhaft, dass gegenüberliegende Trennkanten der Gehäuseteile einen Spalt, insbesondere mit einer Spaltbreite von 1 mm bis 2mm, bilden. Insbesondere beim Verlöten der Bauteile miteinander, insbesondere zur Ausbildung des Lötminiskus ist die Wahl der Spaltbreite wichtig, da weder bei einem zu großen noch bei einem zu kleinen Spalt eine ausreichende Verlötung gewährleistet ist.

Gemäß einer bevorzugten ersten Abwandlung dieser Weiterbildung kann ein Zwischenboden in einen durch gegenüberliegende Trennkanten der Gehäuseteile gebildeten Spalt eingreifen. Dies stabilisiert das mehrteilige Gehäuse in Verbindung mit dem Block. Zudem kann in besonders bevorzugter Weise der im Spalt liegende Zwischenboden zur Abdichtung der Gehäuseteile gegeneinander genutzt werden. In einer bevorzugten zweiten Abwandlung dieser Weiterbildung kann ein Steg Trennkanten der Gehäuseteile abdecken, insbesondere außenseitig am Gehäuse angeordnet sein. Die zusätzlich oder alternativ zur ersten Abwandlung vorgesehene Maßnahme kann ebenfalls zur Stabilisierung des mehrteiligen Gehäuses genutzt werden. Vorzugsweise kann ein Steg eine Sicke aufweisen, insbesondere eine Sicke, die zusätzlich zur Versteifung ausgelegt ist. Besonders bevorzugt ist in Weiterbildung dieser zweiten Abwandlung eine Sicke des Stegs derart ausgebildet, dass sie in einen durch gegenüberliegende Trennkanten der Gehäuseteile gebildeten Spalt eingreift.

In einer vorteilhaften Weiterbildung der Erfindung sind zumindest zwei Bauteile des Wärmetauschers miteinander verlötet.

In einer vorteilhaften Weiterbildung der Erfindung sind alle Bauteile bis auf den zumindest einen Kastendeckel, insbesondere die zwei Kastendeckel, des Wärmetauschers miteinander verlötet.

Insgesamt wird gemäß der vorgenannten Weiterbildungen betreffend das Gehäuse ein besonders stabil und mit vergleichsweise wenigen Teilen assemblierbares Gehäuse zur Verfügung gestellt. Die zuvor erläuterten Maßnahmen zur Ausführung bzw. Anordnung der Trennkanten der Gehäuseteile führen darüber hinaus zu einer besonders bevorzugten weiteren Stabilisierung bzw. Verstärkung des mehrteiligen Gehäuses.

Während sich die Erfindung als besonders nützlich im Rahmen einer Verwendung des Wärmetauschers in Form eines Ladeluftwärmetauschers, insbesondere Ladeluftkühlers erwiesen hat, beispielsweise zur indirekten oder zur direkten Kühlung von Ladeluft in einem Ladeluftzuführsystem für eine Brennkraftmaschine eines Kraftfahrzeugs, und in diesem Sinne zu verstehen ist und während die Erfindung im Folgenden im Detail anhand von Beispielen aus diesem Bereich beschrieben ist, so sollte dennoch klar sein, dass das hier beschriebene Konzept, wie beansprucht, ebenfalls nützlich im Rahmen von anderen Anwendungen ist, welche außerhalb der explizit aufgeführten Beispiele liegen und andere Anwendungen betreffen, die nicht explizit genannt sind. Beispielsweise könnte das vorgestellte Konzept der Erfindung ebenso Anwendung finden für die Verwendung eines Wärmetauschers als Abgaswärmetauscher, insbesondere Abgaskühler, z.B. zur Abgaskühlung in einem Abgasrückführsystem einer Brennkraftmaschine eines Kraftfahrzeugs oder als Zuheizer zur Innenraumerwärmung eines Kraftfahrzeugs. Weiter ist auch eine Verwendung als Ölkühler, insbesondere zur Kühlung von Motoröl und/oder Getriebeöl oder eine Verwendung als Kältemittelkühler oder Kältemittelkondensator in einem Kältemittelkreislauf einer Klimaanlage eines Kraftfahrzeugs möglich. In diesem Zusammenhang führt die Erfindung auch auf ein Abgasrückführsystem für eine Brennkraftmaschine, aufweisend eine Abgasrückführung, einen Kompressor und einen Wärmetauscher in Form eines Abgaswärmetauschers, insbesondere Kühlers, gemäß dem Konzept der Erfindung. Weiter führt die Erfindung auch auf ein Ladeluftzuführsystem für eine Brennkraftmaschine, aufweisend eine Ladeluftansaugung, einen Luftfilter, einen Kompressor und einen Wärmetauscher gemäß dem Konzept der Erfindung in Form eines Ladeluftwärmetauschers, insbesondere Kühlers.

Vorteilhaft ist, dass das erste Bodenteil und das zweite Bodenteil über eine oder mehrere stoffschlüssige, insbesondere Löt- oder Schweiss-, Verbindungen aneinander festgelegt sind.

Vorteilhaft ist, dass das erste Bodenteil und das zweite Bodenteil über eine oder mehrere mechanische, insbesondere formschlüssige, Verbindungen aneinander festgelegt sind.

Vorteilhaft ist, dass das erste Bodenteil und das zweite Bodenteil aneinander getoxt sind.

Vorteilhaft ist, dass der Kastendeckel am Boden über eine oder mehrere stoffschlüssige, insbesondere Löt- oder Schweiss-, Verbindungen festgelegt ist.

Vorteilhaft ist, dass der Kastendeckel am Boden über eine oder mehrere mechanische, insbesondere formschlüssige, Verbindungen festgelegt ist.

Vorteilhaft ist, dass der Kastendeckel am Boden über eine oder mehrere
a) Schraubverbindung und/oder
b) Schlitzbördelung festgelegt ist.

Vorteilhaft ist, dass der Kastendeckel und der Boden und/oder wenigstens ein Bodenteil aus unterschiedlichen Materialien bestehen.

Vorteilhaft ist, dass der Boden und/oder wenigstens ein Bodenteil aus einem Metall, insbesondere aus Aluminium besteht.

Vorteilhaft ist, dass der Kastendeckel aus einem Nichtmetall, insbesondere aus einem Kunststoff, einem Faserverbundstoff, einer Keramik oder Mischungen daraus besteht.

Vorteilhaft ist, dass der Kastendeckel und eine Dichtung Teile eines Kastens sind.

Vorteilhaft ist, dass zwischen dem Boden und/oder einem Bodenteil, insbesondere einem Bodenrahmenteil und dem Kastendeckel eine Dichtung festgelegt ist.

Vorteilhaft ist, dass der Boden und/oder ein Bodenteil, insbesondere ein Bodenrahmenteil, eine Sicke aufweist, insbesondere in einem Bodenrandbereich.

Vorteilhaft ist, dass in der Sicke eine Dichtung angeordnet ist.

Vorteilhaft ist, dass sich eine Stirnseite des Kastendeckels bzw. eines Wandabschnitts des Kastendeckels entlang der Sicke erstreckt.

Vorteilhaft ist, dass der Kastendeckel bzw. ein Wandabschnitt des Kastendeckels mit einer Stirnseite stumpf auf den Boden und/oder ein Bodenteil, insbesondere eine Bodenplatte oder ein Bodenrahmenteil, stößt, insbesondere die Stirnseite die Sicke übergreift.

Vorteilhaft ist, dass eine Stirnseite des Kastendeckels bzw. eines Wandabschnitts des Kastendeckels in die Sicke eingreift.

Vorteilhaft ist, dass der Boden eine Anzahl von Augen zur Aufnahme der Schraubverbindung aufweist, insbesondere an einer Ecke und/oder an einer Seite des Bodens und/oder eines Bodenteils, insbesondere eines Bodenrahmenteils.

Vorteilhaft ist, dass zwei benachbarte Augen einen Abstand im Bereich von 40 bis 90 mm, insbesondere 50 bis 70 mm, haben.

Vorteilhaft ist, dass eine Setzmutter am Boden oder am Kastendeckel zur Bildung der Schraubverbindung vorgesehen ist.

Vorteilhaft ist, dass die Bördelung als Schlitzbördelung, insbesondere als Wellschlitzbördelung, gebildet ist.

Vorteilhaft ist, dass sich eine Bodendicke radial nach außen über eine Sicke hinweg verringert, vorzugsweise in einem Verhältnis größter Bodendicke zu geringster Bodendicke im Bereich zwischen 2:1 und 4:1.

Vorteilhaft ist, dass eine Bodendicke wenigstens an einem Sickengrund geringer als an einer entlang eines Radius weiter innenliegenden Stelle des Bodens ist.

Vorteilhaft ist, dass der Boden am Gehäuse festgelegt ist und/oder der Boden die Strömungskanäle in der einen oder den mehreren Durchgangsöffnungen aufnimmt.

Vorteilhaft ist, dass das Gehäuse sich entlang einer Strömungsrichtung erstreckende Seitenwände aufweist und mehrteilig gebildet ist, wobei wenigstens ein Gehäuseteil eine Gehäusekante ausbildet.

Vorteilhaft ist, dass wenigstens ein Gehäuseteil wenigstens bereichsweise eine erste und eine zweite winklig zueinander ausgerichtete Seitenwand einstückig ausbildet.

Vorteilhaft ist, dass wenigstens ein Gehäuseteil U-förmig gebildet ist, vorzugsweise das Gehäuse aus zwei, insbesondere gegenstückig gebildeten, U-förmigen Gehäuseteilen gebildet ist.

Vorteilhaft ist, dass eine Trennkante von Gehäuseteilen im Bereich einer Seitenwand angeordnet ist.

Vorteilhaft ist, dass wenigstens ein Gehäuseteil L-förmig gebildet ist, vorzugsweise das Gehäuse aus zwei, insbesondere gegenstückig gebildeten, L-förmigen Gehäuseteilen gebildet ist.

Vorteilhaft ist, dass eine Trennkante von Gehäuseteilen im Bereich einer Gehäusekante angeordnet ist.

Vorteilhaft ist, dass der Block eine erste Anordnung und eine zweite Anordnung von Strömungskanälen aufweist, wobei die erste Anordnung und die zweite Anordnung auf gegenüberliegenden Seiten eines Zwischenbodens angeordnet sind.

Vorteilhaft ist, dass ein Zwischenboden parallel zu und/oder im Wesentlichen in einer durch die Trennkanten von Gehäuseteilen aufgespannten Ebene angeordnet ist.

Vorteilhaft ist, dass gegenüberliegende Trennkanten von Gehäuseteilen einen Spalt bilden.

Vorteilhaft ist, dass ein Zwischenboden in einen durch gegenüberliegende Trennkanten der Gehäuseteile gebildeten Spalt eingreift.

Vorteilhaft ist, dass ein Steg Trennkanten von Gehäuseteilen abdeckt, insbesondere außenseitig am Gehäuse angeordnet ist.

Vorteilhaft ist, dass ein Steg eine Sicke aufweist, insbesondere eine Versteifungssicke.

Vorteilhaft ist, dass eine Sicke eines Stegs in einen durch gegenüberliegende Trennkanten von Gehäuseteilen gebildeten Spalt eingreift.

Vorteilhaft ist, dass Gehäuseteile stoffschlüssig und/oder mechanisch aneinander gefügt sind.

Vorteilhaft ist ein Wärmetauscher in Form eines Ladeluft-Wärmetauschers, insbesondere -Kühlers.

Vorteilhaft ist ein Wärmetauscher in Form eines Abgas-Wärmetauschers, insbesondere -Kühlers.

Vorteilhaft ist, dass zumindest zwei Bauteile des Wärmetauschers miteinander verlötet sind.

Vorteilhaft ist, dass alle Bauteile des Wärmetauschers bis auf den zumindest einen Kastendeckel, insbesondere die zwei Kastendeckel, miteinander verlötet sind.

Vorteilhaft ist die Verwendung eines Wärmetauschers als Ladeluftkühler zur direkten oder indirekten Kühlung von Ladeluft in einem Ladeluftsystem für eine Brennkraftmaschine eines Kraftfahrzeugs.

Vorteilhaft ist die Verwendung eines Wärmetauschers als Abgaskühler zur direkten oder indirekten Kühlung von Abgas in einem Abgasrückführsystem für eine Brennkraftmaschine eines Kraftfahrzeugs.

Ausführungsbeispiele der Erfindung werden nun nachfolgend anhand der Zeichnung beschrieben. Diese soll die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, dass vielfältige Modifikationen und Änderungen betreffend Form und Details einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch in Kombination für die Weiterbildung der Erfindung wesentlich sein. Die allgemeine Idee der Erfindung ist nicht beschränkt auf die exakte Form oder das Detail der im Folgenden gezeigten beschrieben Ausführungsformen oder beschränkt auf einen Gegenstand der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Die Zeichnung zeigt im Detail unterschiedliche Ausführungsformen gemäß dem Konzept der Erfindung, wobei sich eine Realisierung des Blocks des Wärmetauschers im Detail als vorteilhaft erwiesen hat, wie sie in der oben genannten deutschen Patentanmeldung der Anmelderin beschrieben ist. Im Einzelnen zeigt die Zeichnung in:
- Fig. 1:: in Ansicht A ein erstes Bodenteil in Form einer Bodenplatte und in Ansicht B ein zweites Bodenteil in Form eines Bodenrahmenteils zur Bildung eines Bodens bei einer besonders bevorzugten Ausführungsform eines Wärmetauschers gemäß der zweiten Variante;
- Fig. 2:: der mit der Bodenplatte und dem Bodenrahmen der Fig.1 gebildete Boden in Ansicht A als perspektivische Ansicht und Ansicht B als Außendraufsicht;
- Fig. 3:: eine besonders bevorzugte Ausführungsform eines Wärmetauschers gemäß der ersten Variante;
- Fig. 4:: eine vergrößerte perspektivische Teilschnittdarstellung des Bodenbereichs der Ausführungsform von Fig. 3;
- Fig.5:: eine Explosionsdarstellung der Fig. 4;
- Fig. 6:: eine Schnittdarstellung des Details einer Schraubverbindung bei der Ausführungsform gemäß Fig. 3 bis Fig. 5,
- Fig. 7:: eine besonders bevorzugte Ausführungsform gemäß der zweiten Variante;
- Fig. 8:: eine vergrößerte perspektivische Teilschnittdarstellung der Ausführungsform von Fig. 7;
- Fig. 9:: eine Explosionsdarstellung von Fig. 8;
- Fig. 10:: eine perspektivische Teilschnittdarstellung des Details einer Wellschlitzbördelung bei Fig. 8;
- Fig. 11, Fig. 12:: eine Schnittdarstellung des Details der Wellschlitzbördelung der Ausführungsform in Fig. 7 bis Fig. 10;
- Fig. 13: eine perspektivische Darstellung einer weiteren bevorzugten Ausführungsform eines Wärmetauschers gemäß der ersten oder zweiten Variante der Erfindung, bei der das Gehäuse in einer ersten Abwandlung aus zwei U-förmigen Gehäuseteilen gebildet ist und mit einem in Explosionsdarstellung gezeigten Steg mit einer Versteifungssicke verstärkt ist;
- Fig. 14: eine perspektivische Darstellung des Wärmetauschers von Fig. 13;
- Fig. 15: eine perspektivische Darstellung noch einer weiteren bevorzugten Ausführungsform des Wärmetauschers ähnlich dem gem. Fig. 13 und Fig. 14, wobei im Unterschied ein Zwischenboden in einen durch gegenüberliegende Trennkanten von U-förmigen Gehäuseteilen gebildeten Spalt eingreift;
- Fig. 16: eine Explosionsdarstellung des in Fig. 15 gezeigten Wärmetauschers;
- Fig. 17: eine perspektivische Darstellung noch einer weiteren Ausführungsform eines Wärmetauschers gemäß der ersten oder zweiten Variante der Erfindung, bei der das Gehäuse in einer zweiten Abwandlung mit L-förmig gebildeten Gehäuseteilen und einer abgewinkelten Trennkante gebildet ist;
- Fig. 18: eine Explosionsdarstellung des Gehäuses des in Fig. 17 gezeigten Wärmetauschers.

In Folgendem werden für gleiche Teile bzw. Teile gleicher Funktion gleiche Bezugszeichen verwendet.

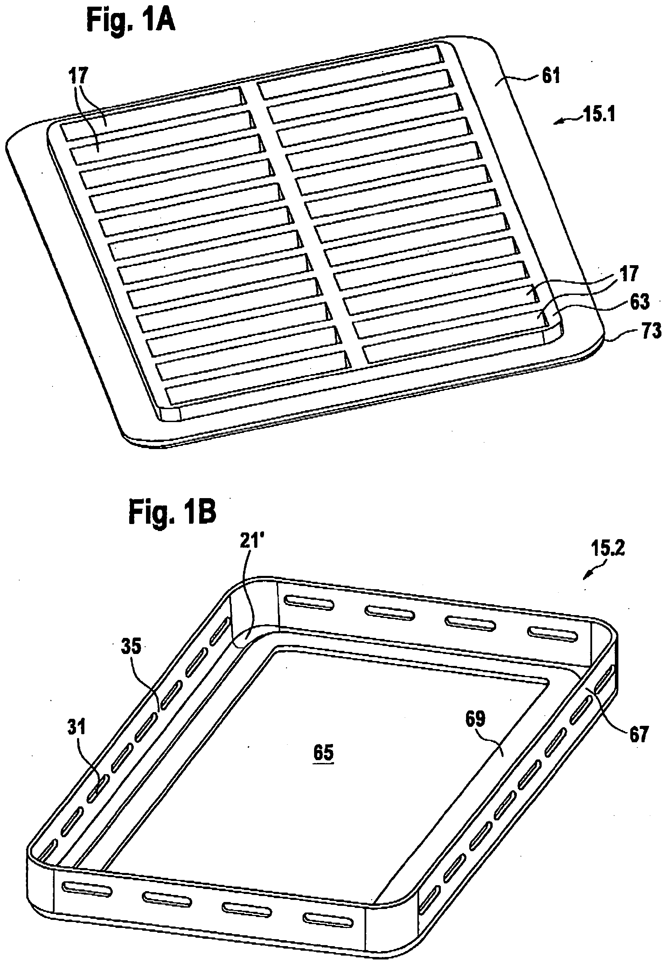

Fig. 1 zeigt in Ansicht A ein als ein inneres Bodenteil in Form einer Bodenplatte mit mehreren Durchgangsöffnungen 17 für Strömungskanäle 5 gebildetes erstes Bodenteil 15.1. Dabei sind die Durchgangsöffnungen 17 vorliegend zweireihig angeordnet und durch ein erhabenes als sich über einen Bodenplattenrandbereich 61 sich erhebendes Podest gebildet, und zwar als ein dickerer innerhalb des Bodenplattenrandbereichs 61 gebildeter innerer Bodenbereich 63. Dabei ist eine Durchgangsöffnung 17 im Wesentlichen rechteckig ausgebildet, um einen Strömungskanal 5 in Form eines Flachrohres aufnehmen zu können.

Das in Ansicht B der Fig. 1 gezeigte zweite Bodenteil 15.2 ist als ein äußeres Bodenteil in Form eines einzigen Bodenrahmenteils gebildet und weist vorliegend einen L-förmigen Querschnitt auf. Die Öffnung 65 des Bodenrahmenteils entspricht im Wesentlichen der Fläche des Podestes 63, kann also die durch das Podest 63 geführten Durchgangsöffnungen 17 mit eingesetzten Strömungskanälen 5 aufnehmen.

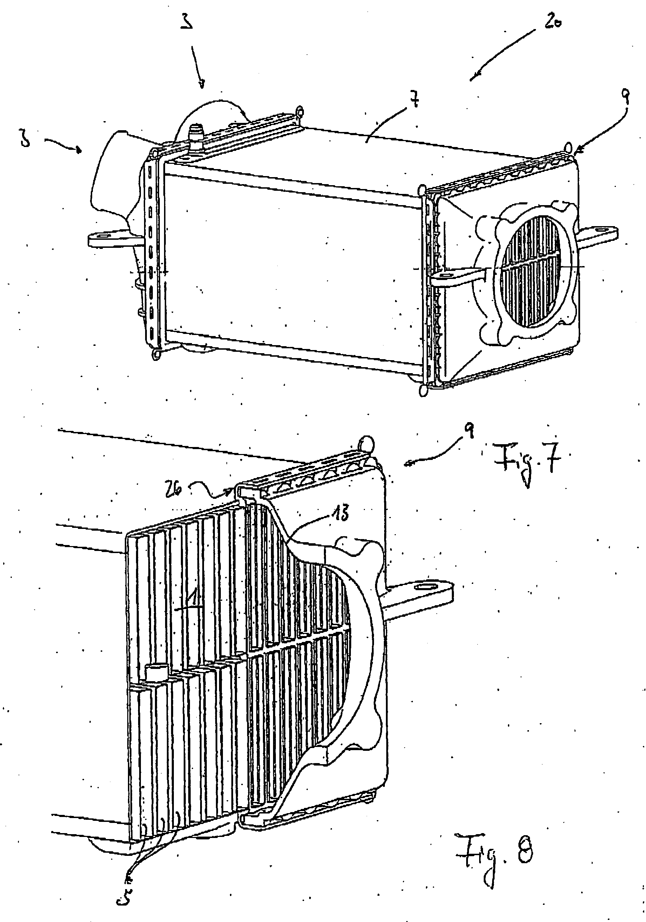

Der quer zur Ebene der Bodenplatte liegende Schenkel 67 des L-förmigen Querschnittes weist vorliegend vollumfänglich umlaufend beabstandete Langlöcher 31 auf, die zur Bildung einer in Bezug auf Fig. 7 bis Fig. 12 erläuterten Schlitzbördelung in den Schenkel 67 gestanzt sind. Zwischen den Langlöchern 31 befindet sich Material 35 des Schenkels 67, welches zur Bildung der Schlitzbördelung genutzt wird.

Der andere in der Ebene der Bodenplatte liegende Schenkel 69 des L-förmigen Querschnitts dient in einer ersten Abwandlung auf seiner in Ansicht B der Fig. 1 nicht zu erkennenden Unterseite als Anlagefläche für den Bodenplattenrandbereich 61. Der innere Bereich 63 der Bodenplatte ist dann passgenau auf die Öffnung 65 des Bodenrahmenteils ausgebildet. Der äußere Rand des Bodenplattenrandbereichs 61 grenzt dann an eine in eine Sicke, zwischen dem Schenkel 69 und dem Schenkel 67 übergehende Berandung des Schenkels 69. Dadurch ist die Bodenplatte - bei der ersten Abwandlung beim Einsetzen von unten - in den Bodenrahmenteil bereits gegen seitliches Verschieben passgenau festgelegt.

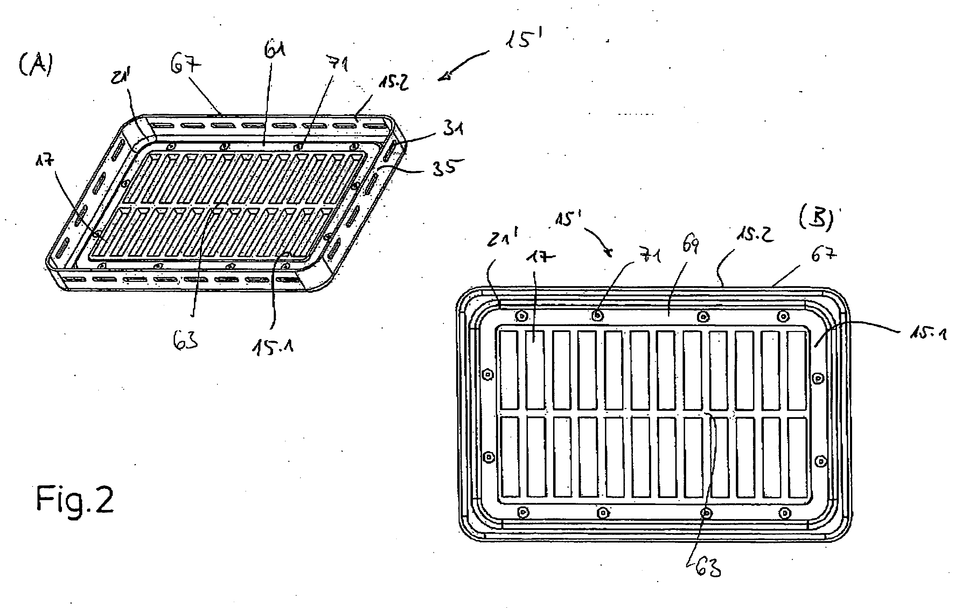

Fig. 2 zeigt - in Ansicht A perspektivisch und in Ansicht B als Draufsicht - einen Boden 15', wie er in noch in Bezug auf Fig. 7 bis Fig. 12 näher erläutert ist, zur Anbindung eines Kastendeckels eines Wärmetauschers 20 einerseits und zur Aufnahme mehrerer Durchgangsöffnungen 17 für die Strömungskanäle 5 andererseits.

Vorliegend ist das erste Bodenteil 15.1 und das zweite Bodenteil 15.2 durch mehrere Toxpunkte 71 aneinander festgelegt. Es ist zu verstehen, dass selbstverständlich eine über die obige erste Abwandlung hinausgehende Vielzahl weiterer relativer Anordnungen des ersten Bodenteils 15. 1 und des zweiten Bodenteils 15.2 möglich ist und darüber hinaus hier nicht gezeigte andere formschlüssige oder stoffschlüssige Verbindungen zur Festlegung des ersten Bodenteils 15.1 und des zweiten Bodenteils 15.2 aneinander je nach Bedarf und Aufwand zweckmäßig sein können. Eine Toxverbindung mit mehreren Toxpunkten 71 hat sich im vorliegenden Fall als besonders bevorzugt erwiesen, Insbesondere kann dabei - wie vorliegend anhand einer zweiten, nicht erfindungsgemäßen Abwandlung erläutert - eine Bodenplatte mit ihrem Bodenplattenrandbereich 61 auf dem Schenkel 69 des Bodenrahmenteils aufliegen - d.h. die Bodenplatte kann in das Bodenrahmenteil eingelegt werden. Dies hat den Vorteil, dass der Schenkel 69 auch geradlinig ausgebildet werden kann und dennoch ein Sicke 21' zwischen dem Schenkel 67 und der Bodenplatte gebildet ist - nämlich durch den aufstehenden Rand 73 der Bodenplatte. Auch in diesem Fall kann das erste Bodenteil 15.1 und das zweite Bodenteil 15.2 durch Toxen aneinander festgelegt werden. Darüber hinaus besteht bei der hier dargestellten zweiten Abwandlung der Vorteil, dass das Bodenteil 15.1 zur Abstützung des Kastendeckels 11' dienen kann. Darüber hinaus kann das Bodenrandteil mit einer Sicke 21' oder auch im Schenkel 69 flach ausgebildet sein. Beim Bilden der Schlitzbördelung mit dem Schenkel 67 wird dieser dann zusätzlich auf den Bodenplattenbereich 61 gedrückt, so dass die Bodenplatte in einer aus Fig. 7 bis Fig. 12 ersichtlichen Weise durch eine aufstehende Stirnseite 25' eines Wandbereichs 28 eines Kastendeckels 11' auf dem Bodenplattenrandbereich 61 und der Schlitzbördelung festgelegt sein kann.

Insgesamt ergibt sich bei dieser Art eines gemäß Fig. 1 und Fig. 2 zusammengesetzten Bodens 15' aus einem ersten Bodenteil 15.1 und einem zweiten Bodenteil 15.2 der Vorteil, dass das als Bodenrandteil gebildete zweite Bodenteil 15.2 gut herstellbar ist und auch in einer für die Schützbördeiung vorteilhaften und praktisch beliebigen Materialstärke. Das zweite Bodenteil kann mit der erwähnten Sicke 21' oder auch ohne dieselbe - dann unter Einsparung eines Tiefziehvorgangs - hergestellt werden. Dennoch ergibt sich durch den aufstehenden Rand 73 eine sickenartige Nut, die z.B. zur Einlegung einer Dichtung od. dgl. genutzt werden kann. Auch ergibt sich ein vergleichsweise gut herstellbarer geringer Bodenüberstand mit einer vergleichsweise guten Abstützung für einen Kastendeckel 11'. Durch die zweigeteilte Bauweise ist somit eine solide Kastenabstützung möglich. Darüber hinaus lässt sich das als Bodenplatte ausgebildete erste Bodenteil 15.1 besonders einfach und sicher herstellen. Es hat sich gezeigt, dass sich das Toxverfahren für den Zusammenbau des ersten und zweiten Bodenteils 15.1, 15.2 in besonders positiv überraschender Weise verfahrensunkritisch erweist und die Kosten bei einer zweiteiligen Bauweise gemäß Fig. 1 und Fig. 2 neutral im Vergleich zu einer auch möglichen einteiligen Bauweise - wie z. B. in der angemeldeten noch nicht offen gelegten Anmeldung unter dem Aktenzeichen der Anmelderin 06-B-239-A erläutert - sind.

Ohne im Einzelnen auf die zweiteilige Bauweise des Bodens 15' im Einzelnen zurückzukommen wird bei den Fig. 7 bis Fig. 12 gezeigten Ausführungen eines Bodens 15' ein Boden gemäß zweiteiliger Bauweise in Fig. 1 und Fig. 2 eingesetzt.

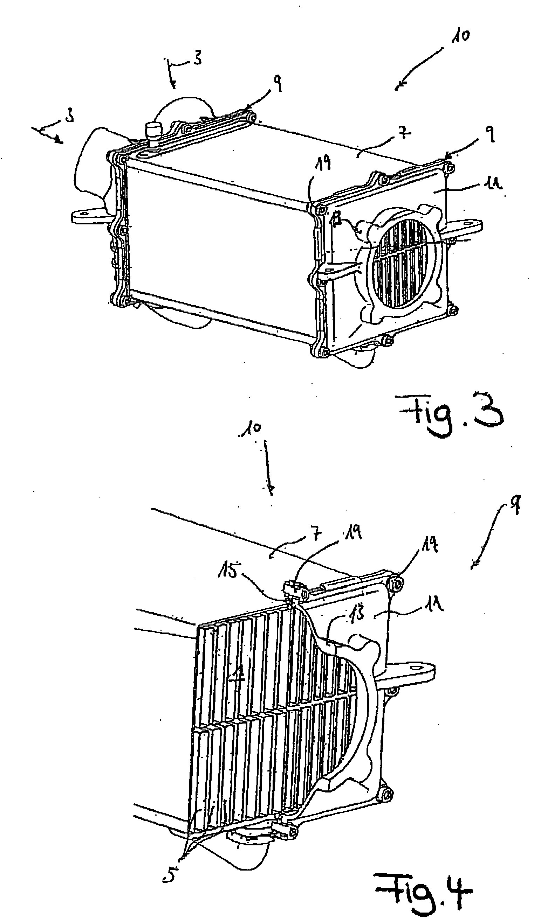

Gleichwohl ist zu bemerken, dass auch ein nicht mit einer Schlitzbördelung, versehener Boden - beispielsweise mit einer Schraubverbindung gebildeter Boden 15 gemäß Fig. 3 bis Fig. 6 - als ein hier nicht gezeigter so doch im Prinzip ähnlich zusammengesetzter Boden mit einem ersten Bodenteil - sogar zum Bodenteil 15.1 identisch - und einem entsprechend für die Schraubverbindung im Vergleich zum Bodenteil 15.2 abgewandelten zweiten Bodenteil gebildet werden kann. Auch in solch einem Fall kann der als Bodenplatte ausgebildete erste Bodenteil 15.1 ggf. passgenau in ein rahmenartiges mit L-förmigen Querschnitt ausgebildetes zweites Bodenteil 15.2 eingesetzt werden, wobei am zweiten Bodenteil 15.2 - wie aus Fig. 3 bis Fig. 6 ersichtlich - anstatt der Langlöcher 31 Augen zur Anbindung eines Kastendeckels 11 vorgesehen sein können.

Fig. 3 zeigt einen Wärmetauscher 10 in Form eines Ladeluftkühlers für eine indirekte Ladeluftkühlung, der in einem Ladeluftsystem für eine Brennkraftmaschine eingesetzt werden kann. Ein nicht weiteres dargestelltes Ladeluftsystem weist außerdem eine Ladeluftansaugung, einen Luftfilter und einen Kompressor auf. Der Wärmetauscher 10 stellt eine besonders bevorzugte Ausführungsform der ersten Variante dar, gemäß der ein Kastendeckel 11 an einem Boden 15 über mehrere Schraubverbindungen 19 festgelegt ist.

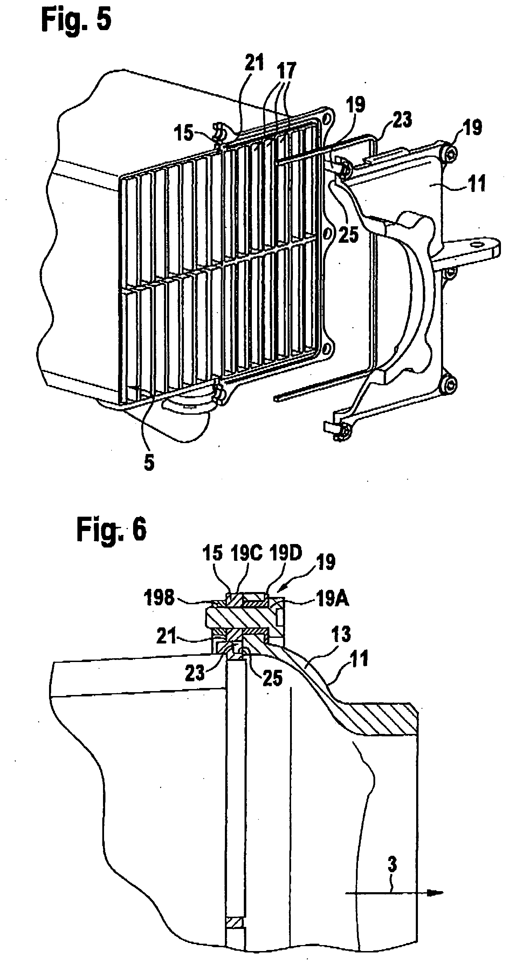

Wie aus einer Zusammenschau von Fig. 3 und Fig. 4 ersichtlich ist, weist der Wärmetauscher 10 einen Block 1 auf, der zur voneinander getrennten und wärmetauschenden Führung eines ersten Fluids in Form einer Ladeluft 3 als auch eines nicht näher dargestellten Kühlmittels vorgesehen ist. Dazu weist der Block 1 eine Anzahl von, von der Ladeluft 3 durchströmbaren Strömungskanälen 5 auf sowie ein die Strömungskanäle 5 aufnehmendes und vom Kühlmittel durchströmbares Gehäuse 7. Vorliegend weist der Ladeluftkühler 10 zwei Kästen 9, 9' auf, von denen der vordere Kasten 9 in Fig. 4 bis Fig. 6 näher dargestellt ist. Beide Kästen 9, 9' sind mit den Strömungskanälen 5 strömungsverbunden und weisen einen entsprechend den Anschlüssen für die Ladeluft 3 im einzelnen unterschiedlich ausgestalteten Kastendeckel 11, 11' auf. Bei dieser Ausführungsform sind beide Kastendeckel 11, 11' aus Kunststoff gebildet, wobei der vordere Deckel 11 mit einer einzigen einstückig angeformten Diffusoranordnung 13 für den Ladeluftanschluss näher dargestellt ist. Am Deckel 11 ist ein zweiteiliger Boden 15 - ähnlich dem von Fig. 1 und Fig. 2 - festgelegt, welcher in Fig. 5 deutlich dargestellte Durchgangsöffnungen 17 und diesen Durchgangsöffnungen 17 zugeordnete Strömungskanäle 5 aufweist.

In einer abgewandelten Ausführungsform kann der Wärmetauscher auch als Abgaswärmetauscher ausgebildet sein, der entsprechend, statt von Ladeluft 3, von Abgas durchströmbar ist.

Bei der in Fig. 3 bis Fig. 6 dargestellten Ausführungsform gemäß der ersten Variante der Erfindung ist der Kastendeckels 11, 11' mit mehreren in Fig. 6 näher dargestellten Schraubverbindungen 19 am Boden 15 festgelegt. Dabei weist der Boden 15 eine vorliegend vollständig entlang des Bodens 15 umlaufende Sicke 21 auf, in der eine Dichtung 23, vorliegend in Form einer Ringdichtung, aufgenommen ist.

Wie in Fig. 6 in Zusammenschau mit Fig. 3 bis Fig. 5 zu erkennen ist, erstreckt sich die Stirnseite 25 des Kastendeckels 11, 11' entlang der Sicke 21 und stößt dabei stumpf auf den Boden 15, wobei die Stirnseite 25 die Sicke 21 übergreift. Dadurch wird die Dichtung 23 durch die Stirnseite 25 in die Sicke 21 gedrückt, so dass eine sehr effektive Abdichtung zwischen dem Boden 15 und dem Kastendeckel 11 erreicht wird. Die Schraubverbindungen 19 werden vorliegend jeweils durch eine Schraube 19A und einer in einem Schraubauge 19C gehaltenen Setzmutter 19B gebildet. Wie in Fig. 3 bis Fig. 5 deutlich gezeigt ist, ist jeweils ein Schraubauge 19C an jeweils einer Ecke bzw. einer Seitenmitte des Bodens 15 angeordnet. Die Schraubverbindung ist des Weiteren durch einen Ringflansch 19D zwischen Setzmutter 19B und Schraube 19A gesichert. Durch die Schraubverbindung 19 wird ein Pressdruck zwischen Kastendeckel 11 und dem Boden 15 auf die Dichtung 23 ausgeübt, welche sich aufgrund des Pressdrucks in der Sicke 21 ausdehnt und Anlageflächen zwischen Kastendeckel 11 und Boden 15 wirksam abdichtet.

Die Schraubaugen 19C sind zueinander gleichmäßig beabstandet - vorliegend sollte der Abstand ca. 50 bis 80 mm betragen. Zum Anschrauben sind entweder auf der dem Block 1 zugewandten Bodenseite oder am Kasten 9, 9' Setzmuttern 19B angeordnet. Vorliegend wird die Schraube 19A durch einen Kastenfuß in Form einer Metallbuchse am Boden 15 eingesteckt und mit der Mutter 19B hinter dem Boden 15 verschraubt.

Bei der Schraubverbindung 19 liegt die Nutbreite im Boden 15 bei ca. 3 mm. Die 2 mm breite Dichtung 23 wird in die Sicke 21 gedrückt. Die Sicke 21, 21' ist an einigen Stellen lokal, vorliegend alle 30 mm, auf das Sickenmaß aufgedickt, damit die Dichtung 23 positioniert ist.

Fig. 7 zeigt einen anderen Ladeluftkühler 20, ebenfalls für eine oben in Bezug auf den Ladeluftkühler 10 näher beschriebene indirekte Ladeluftkühlung, bei dem vorliegend gemäß einer bevorzugten Ausführungsform der zweiten Variante der Kastendeckel 11 am zweiteiligen Boden 15' - identisch zu dem in Fig. 1 und Fig. 2 - über eine Schlitzbördelung 26 als Wellschlitzbördelung festgelegt ist. Gleiche Bezugszeichen wurden für einander entsprechende Teile der Ladeluftkühler 10 und 20 verwendet.

Im Unterschied zu der in Bezug auf Fig. 3 bis Fig. 6 beschriebenen Ausführungsform, ist bei der hier gezeigten Ausführungsform eines Ladeluftkühlers 20 der Kastendeckel 11' am Boden 15' über eine Wellschlitzbördelung 26 festgelegt. Dazu ist in der bei der vorliegenden Wellschlitzbördelung 26 gebildeten Sicke 21' eine Dichtung 23' eingelegt, welche nach Aufsetzen des Kastendeckels 11' durch die in die Sicke 21' eingreifende Stirnseite 25' des Kastendeckels 11' abdichtend in die Sicke 21' gedrückt wird. Dadurch wird eine besonders vorteilhafte Abdichtung des Kastens 9, 9' erreicht. Der die Stirnseite 25' des Kastendeckels 11' bildende Wandabschnitt 28 des Kastendeckels 11' geht einends in den zuvor beschriebenen als Diffusor 13 ausgebildeten Luftanschluss über und anderenends weist der Wandabschnitt 28 entlang einer Höhe H der Sicke 21' halbzylindrisch ausgeformte Rippen 27 auf, die auf Abstand 29 gesetzt sind. Den Rippen 27 gegenüberliegend ist jeweils ein Langloch 31 einer dem Wandabschnitt 28 gegenüberliegenden Flanke 33 angeordnet. Dem Abstand 29 gegenüberliegend ist das zwischen den Langlöchern 31 liegende Material 35 der Flanke 33, vorliegend Aluminium, angeordnet. Dieses Material 35 kann beim Schließen der Schlitzbördelung 26 zur Bildung der Wellschlitzbördelung in den Abstand 29 zwischen die Rippen 27 gedrückt werden. Zumindest einige der Bauteile des Wärmetauschers 10 sind miteinander verlötet, insbesondere Nocolok gelötet. In einem anderen Ausführungsbeispiel sind alle Bauteile des Wärmetauschers 10 bis auf den zumindest einen Kastendeckel, insbesondere die Kastendeckel, miteinander verlötet beispielsweise Nocolok gelötet.

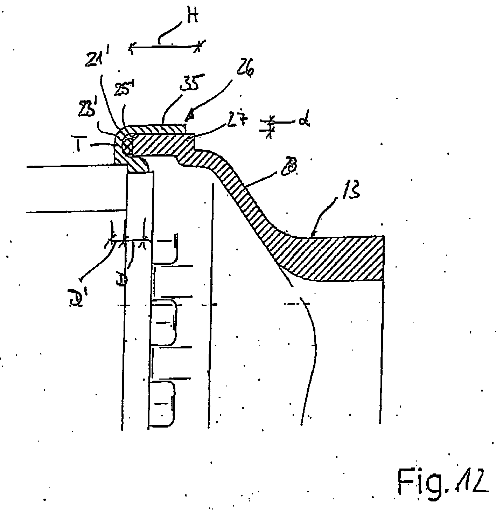

Bei der in Fig. 12 ausgeführten Darstellung ist - gleichermaßen anwendbar ein einem Wärmetauscher 10 und einem Wärmetauscher 20 - darüber hinaus dargestellt, dass sich eine Bodendicke radial nach außen über die Sicke 21' hinweg verringert - vorliegend vom größten Wert D im Bereich der Öffnungen 17 für die Strömungskanäle 5, vorliegend Rohre, über einen Wert D' im Bereich der Sicke 21', bis hin zu einem kleinsten Wert d im Bereich der außenliegenden Flanke 33 der Sicke 21', dessen Material 35 zur Bildung der Wellschlitzbördelung 26 umgebördelt wird. Vorliegend ändert sich die Dicke des Bodens 15' von D = 4 mm auf d = 1,5 mm, d.h. insgesamt ist es bei Ausführungsformen dieser Art möglich, das Bodenmaterial um 50 bis 70 % zu reduzieren. Es hat sich darüber hinaus gezeigt, dass es dazu auch möglich ist, die Dicke im Tiefpunkt T der Sicke 21' bereits im Bereich des kleinsten Wertes d auszubilden. Ansonsten ist es unabhängig von der hier beschriebenen Ausführungsform möglich, den Übergang von der starken Dicke D auf die dünne Dicke d beliebig auszuführen.

Die beschriebene Ausbildung der Sicke 21' hat den Vorteil, dass der Boden 15' bei einem guten Kassettierprozess im Bereich der Öffnungen 17 mit der starken Dicke D eine gute Rohr- bzw. Strömungskanalverlötung erlaubt. Dagegen wird aufgrund des kleinsten Wertes d der geringen Materialstärke im Bereich der Wellschlitzbördelung 26 ein besonders bauraumsparendes und Verschließkräfte geringhaltendes Konzept erreicht. Beispielsweise kann das zu bördelnde Material 35 im Rahmen eines Stanzprozesses weggedrückt werden. Durch die Materialreduzierung im Bereich der Flanke 33 kann die Befestigung des Kastens 9, 9' mit deutlich weniger Bauraumbedarf ausgeführt werden. Zumindest einige der Bauteile des Wärmetauschers 10 sind miteinander verlötet, insbesondere Nocolok gelötet. In einem anderen Ausführungsbeispiel sind alle Bauteile des Wärmetauschers 10 bis auf den zumindest einen Kastendeckel, insbesondere die Kastendeckel, miteinander verlötet beispielsweise Nocolok gelötet.

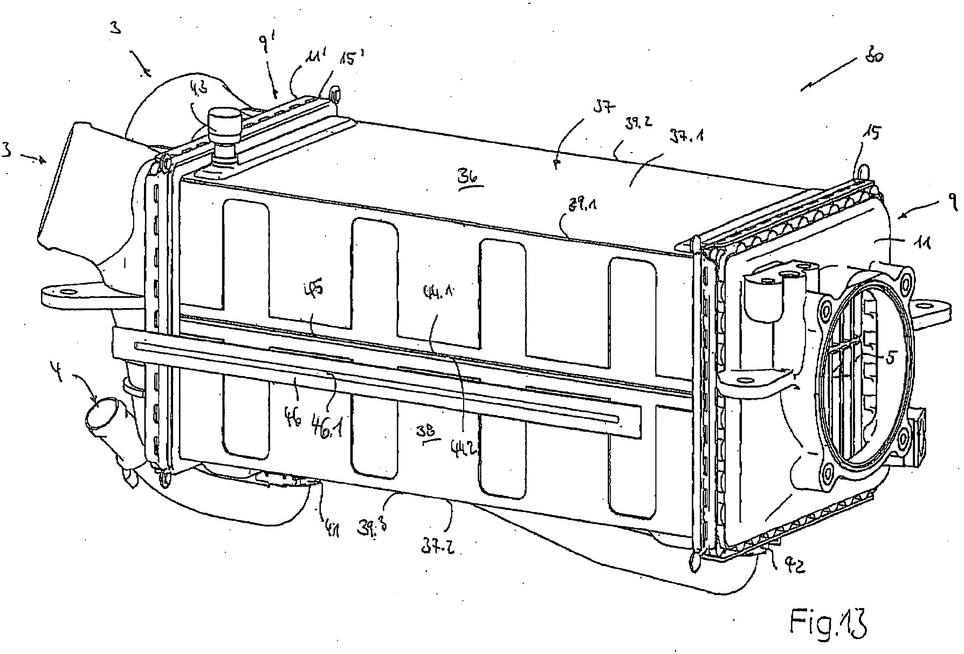

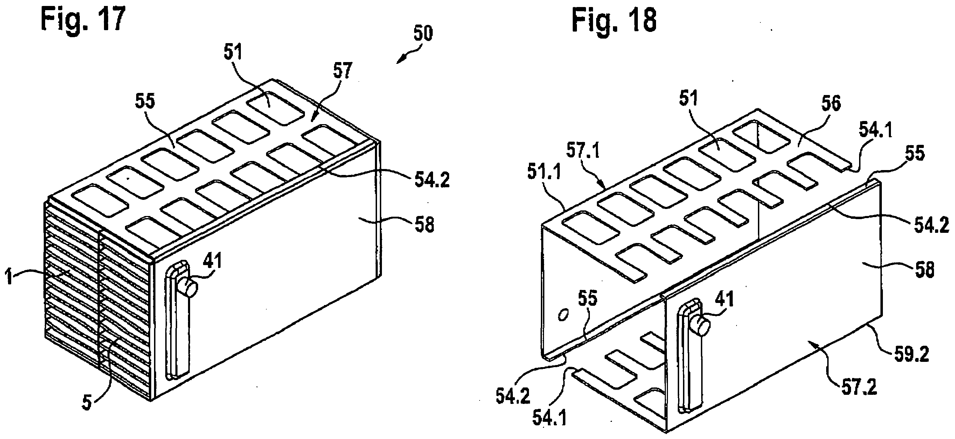

Die anhand der Fig. 13 des Fig. 18 erläuterten Ausführungsformen eines Wärmetauschers in Form eines Ladeluftkühlers 30, 40, 50 zeigen vorteilhafte Beispiele einer Ausführung eines Gehäuses 7, wie es in den vorher beschriebenen Fig. 3 bis Fig. 12 allgemein gezeigt ist. Die in Fig. 13 bis Fig. 18 gezeigten Abwandlungen eines Gehäuses 37, 47, 57 können nach Bedarf für ein Gehäuse 7 der Fig. 3 bis Fig. 12 eingesetzt werden. Die in Fig. 13 bis Fig. 18 beschriebenen Ausführungsformen eines Wärmetauschers 30, 40, 50 sind lediglich beispielhaft als Ausführungsformen gemäß der zweiten Variante der Erfindung dargestellt, bei der ein Kastendeckel des Wärmetauschers 30, 40, 50 am Boden als Schlitzbördelung festgelegt ist. Die in Bezug auf Fig. 13 bis Fig. 18 gemachten Angaben lassen sich gleichermaßen auf eine nicht gezeigte Ausführungsform eines Wärmetauschers anwenden, bei welcher der Kastendeckel durch eine Schraubverbindung am Boden festgelegt ist. Insgesamt lassen sich die in Fig. 3 bis Fig. 12, insbesondere betref fend die Festlegung des Kastendeckels, am Boden offenbarten Merkmale in beliebiger Weise sowohl einzeln als auch in Kombination mit den in Fig. 13 bis Fig. 18 offenbarten Merkmalen, insbesondere betreffend die Ausbildung eines Gehäuses 37, 47, 57, einzeln oder in Kombination kombinieren und je nach Verwendungszweck einsetzen. Insofem wurden für gleiche Teile oder Teile gleicher Funktion in den Ausführungsbeispielen gleiche Bezugszeichen verwendet. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet, beispielsweise Nocolok gelötet.

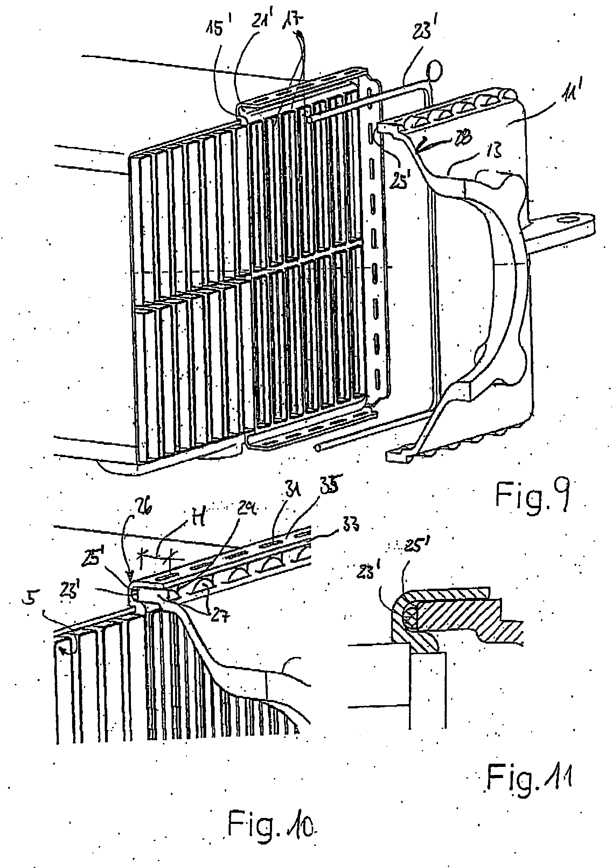

Fig. 13 zeigt einen Wärmetauscher 30 in Form eines Ladeluftkühlers als Ausführungsform gemäß der zweiten Variante der Erfindung ähnlich dem in Fig. 7 beschriebenen Wärmetauscher 20. Dieser weist wiederum einen Block 1 mit einer Anzahl von Ladeluft 3 durchströmbaren Strömungskanälen 5 auf, welche in einem vom Kühlmittel durchströmbaren Gehäuse 37 aufgenommen sind. Wie anhand von Fig. 7 bis Fig. 12 erläutert, sind Kästen 9, 9' mit den Strömungskanälen 5 strömungsverbunden und weisen einen entsprechend den Anschlüssen für die Ladeluft 3 im einzelnen unterschiedlich ausgestalteten Kastendeckel 11, 11' auf. Diese sind jeweils am Boden 15, 15' entsprechend der bezüglich Fig. 7 bis Fig. 12 erläuterten Weise festgelegt. Der Boden 15, 15' ist am Gehäuse festgelegt, wobei die Strömungskanäle 5 die in Fig. 9 näher dargestellten Durchgangsöffnungen 17 durchsetzen.

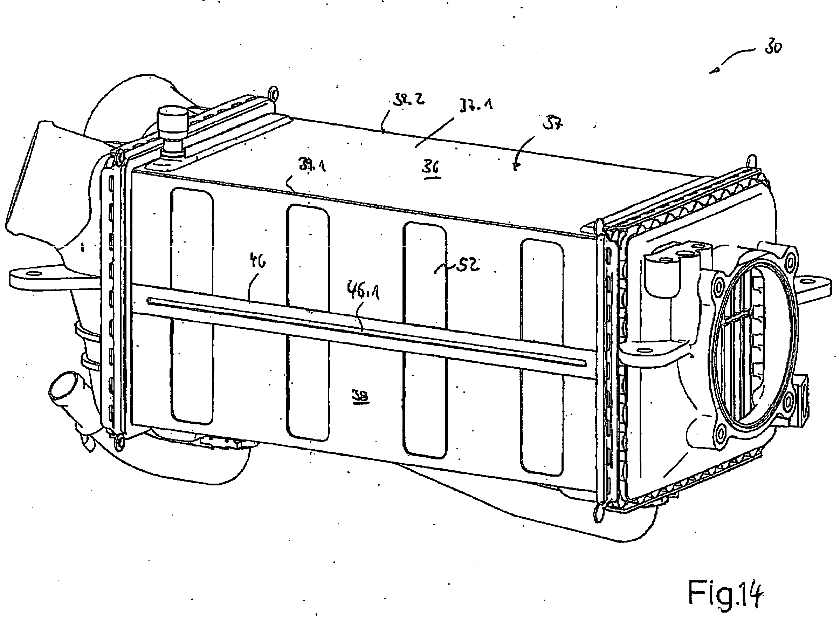

Das in Fig. 14 perspektivisch und in Fig. 13 als Explosionsdarstellung dargestellte Gehäuse 37 hat zwei Deckwände 36 und zwei Seitenwände 38, wobei eine Deckwand 36 im Wesentlichen rechtwinklig zur Seitenwand 38 ausgerichtet ist. Ein vorliegend U-förmig gebildetes oberes Gehäuseteil 37.1 bildet eine erste und zweite obere Gehäusekante 39.1, 39.2, während ein zweites unteres Gehäuseteil 37.2 eine erste untere Gehäusekante 39.3 und eine nicht dargestellte zweite untere Gehäusekante 39.4 bildet. Das obere Gehäuseteil 37.1 ist gegenstückig zum unteren Gehäuseteil 37.2 - bis auf Kühlmittelanschlüsse 41, 42, 43 - im Wesentlichen gleich ausgeführt. Über die Kühlmittelanschlüsse 41, 42, 43 wird Kühlmittel 4 in nicht näher dargestellter Weise dem Inneren des Gehäuses 37 zur Umspülung der Strömungskanäle 5 zu- und abgeführt. Vorliegend ist der gesamte Gehäusemantel des Gehäuses 37 mittels dem oberen Gehäuseteil 37.1 und dem unteren Gehäuseteil 37.2 gebildet. Die Trennkanten 44.1 bzw. 44.2 des oberen Gehäuseteils 37.1 bzw. des unteren Gehäuseteils 37.2 sind vorliegend im Bereich einer Seitenwand 38 des Gehäuses 37 angeordnet und stehen sich zur Ausbildung eines Spalts 45 gegenüber. Zum dichten Verschließen des Gehäuses 37 ist der Spalt 45 mit einem Steg 46 abgedeckt, wobei eine Versteifungssicke 46.1 des Stegs in den Spalt 45 eingreift. Neben einem dichten Verschließen des Gehäuses 37 führt die Anbringung des Stegs 46 dazu, dass die bereits durch einteilige Ausführung des oberen Gehäuseteils 37.1 und des unteren Gehäuseteils 37.2 vergleichsweise hohe Stabilität des Gehäuses 37 noch weiter verbessert wird. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet, beispielsweise Nocolok gelötet.

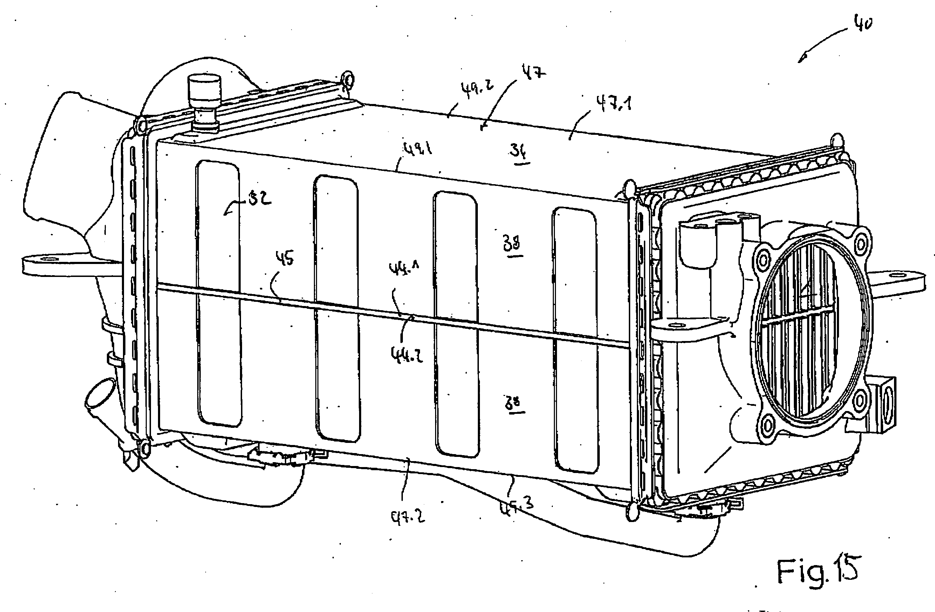

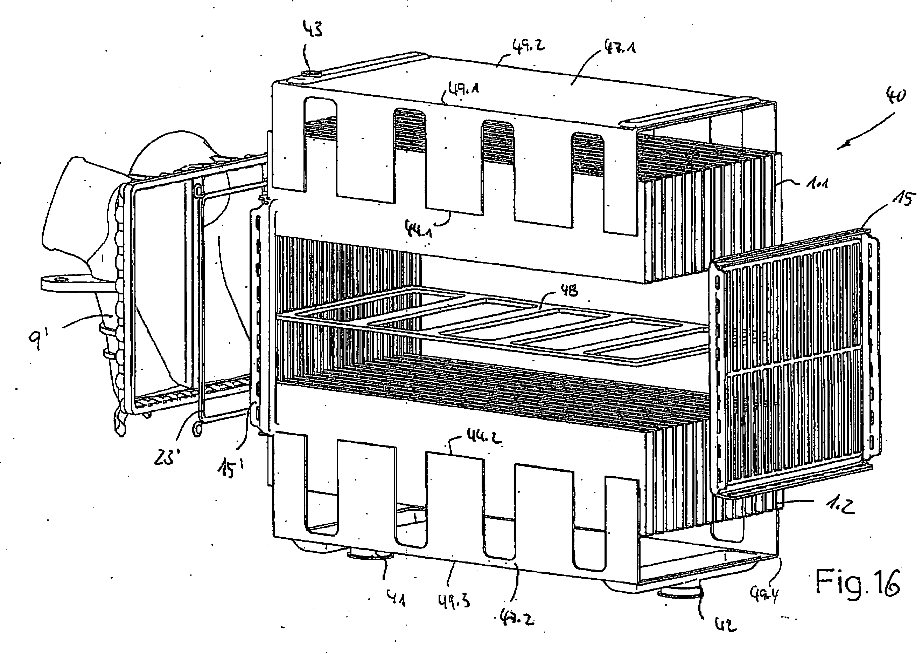

Fig. 15 zeigt in perspektivischer Darstellung und Fig. 16 in einer Explosionsdarstellung eine weitere Ausführungsform eines Wärmetauschers 40 in Form eines Ladeluftkühlers, dessen Gehäuse 47 wiederum aus einem oberen Gehäuseteil 47.1 und einem unteren Gehäuseteil 47.2 gebildet ist, wobei die Gehäuseteile 47.1 und 47.2 praktisch identisch zu den Gehäuseteilen 37.1 und 37.2 der Fig. 13 - U-förmig gebildet sind. Die sich gegenüberliegenden Trennkanten 44.1, 44.2 der Gehäuseteile 47.1, 47.2 bilden wiederum einen Spalt 45, in den ein in Fig. 16 näher dargestellter Zwischenboden 48 eingreift. Der Block 1 weist vorliegend eine erste Anordnung 1.1 und eine zweite Anordnung 1.2 von Strömungskanälen 5 auf, wobei die erste Anordnung 1.1 und die zweite Anordnung 1.2 auf gegenüberliegenden Seiten des Zwischenbodens 48 angeordnet sind. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet, beispielsweise Nocolok gelötet.

Aus den Darstellungen in Fig. 13 bis Fig. 16 ist ersichtlich, dass sich ein Wärmetauscher 30, 40 mit den U-förmig gebildeten Gehäuseteilen 37.1, 37.2, 47.1, 47.2 besonders einfach kassetieren lässt, wobei gemäß der in Fig. 13 und Fig. 14 dargestellten Ausführungsform ein Steg 46 zur Abdichtung des Spalts 45 zwischen den Trennkanten 44.1 und 44.2 genutzt wird, während gemäß der in Fig. 15 und Fig. 16 dargestellten Ausführungsform ein Zwischenboden 48 zur Abdichtung des Spalts 45 genutzt wird. Die Gehäuseteile 37.1, 37.2 bzw. 47.1, 47.2 werden vorliegend aufeinander gelötet - alternativ oder zusätzlich können die Gehäuseteile auch aufeinandergeschweißt werden. In einer nicht dargestellten Weise können die Gehäuseteile auch zusätzlich oder alternativ mechanisch aneinandergefügt sein.

Fig. 17 zeigt eine weitere Ausführungsform eines Wärmetauschers 50, bei dem ein Gehäuse 57 in der in Fig. 16 dargestellten Weise mit einem oberen L-förmigen Gehäuseteil 57.1 und einem unteren L-förmigen Gehäuseteil 57.2 gebildet ist. Wiederum bildet jedes L-förmige Gehäuseteil 57.1, 57.2 eine Gehäusekante 59.1 bzw. 59.2 aus, sowie jeweils eine Deckwand 56 und Seitenwand 58 des Gehäuses 57. Bei der in Fig. 17 und Fig. 18 gezeigten Ausführungsform ist eine Deckwand 56 jeweils mit Versteifungsfeldern und/oder öffnungen 51 versehen, während bei den in Fig. 13 bis Fig. 16 dargestellten Ausführungsformen Versteifungsfelder 52 und/oder Öffnungen auf einer Seitenwand 38 angebracht sind. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet, beispielsweise Nocolok gelötet.

Wie aus Fig. 18 ersichtlich, ist das erste Gehäuseteil 57.1 und das zweite Gehäuseteil 57.2 wiederum gegenstückig ausgebildet, so dass durch Assemblierung derselben an einer Trennkante 54.1, 54.2 der gesamte Gehäusemantel des Gehäuses 57 fertig gestellt ist. Vorliegend sind jeweils diagonal gegenüberliegende Trennkanten 54.2 mit einer umgebogenen Lasche 55 versehen, welche - außer zur Versteifung des L-förmigen Gehäuseteils 57.1, 57.2 - auch der besseren formschlüssigen Befestigung der Gehäuseteile 57.1, 57.2 dient. Dazu wird vorteilhaft jeweils eine Trennkante 54.1 unter die Lasche 55 der gegenüberliegenden Trennkante 54.2 geschoben, um den Gehäusemantel des Gehäuses 57 bereitzustellen. Die Gehäuseteile 57.1, 57.2 werden vorliegend aneinander gelötet. Zumindest einige der Bauteile des Wärmetauschers sind miteinander verlötet, insbesondere Nocolok gelötet. In einem anderen Ausführungsbeispiel sind alle Bauteile des Wärmetauschers bis auf den zumindest einen Kastendeckel, insbesondere die Kastendeckel, miteinander verlötet, beispielsweise Nocolok gelötet.

Insgesamt ermöglichen die in Fig. 13 bis Fig. 18 dargestellten Ausführungsformen eines Gehäuses 37, 47, 57 eine Realisierung eines mehrteiligen und dennoch besonders stabilen Gehäuses.

Zusammenfassend wird ein Wärmetauscher 10, 20, 30, 40, 50, insbesondere ein Ladeluftwärmetauscher oder Abgaswärmetauscher, zum Wärmetausch zwischen einem ersten Fluid, insbesondere einer Ladeluft 3 oder einem Abgas, und einem zweiten Fluid, insbesondere einem Kühlmittel, angegeben, welcher aufweist: eine im Block 1 voneinander getrennte und wärmetauschende Führung des ersten und zweiten Fluids, welcher Block 1 eine Anzahl von dem ersten Fluid durchströmbare Strömungskanäle 5 und ein die Strömungskanäle 5 aufnehmendes von dem zweiten Fluid durchströmbares Gehäuse 7, 37, 47, 57 aufweist; mindestens einen Kastendeckel 11, 11', welcher mit den Strömungskanälen 5 strömungsverbunden ist, einen Boden 15, 15', der am Kastendeckel 11, 11' festgelegt ist und mit einer oder mit mehreren Durchgangsöffnungen 17 für Strömungskanäle 5 versehen ist. Um eine vorteilhafte Anbindung des Kastendeckels 11, 11' am Boden 15, 15' zu erreichen, insbesondere für den Fall, dass Kastendeckels 11, 11' und Boden 15, 15' aus unterschiedlichen Materialien bestehen und dennoch eine zweckmäßige Fertigung und flexible Verwendung des Bodens zu ermöglichen, sieht die Erfindung vor, dass der Boden 15, 15' aus wenigstens einen ersten Bodenteil und einem zweiten Bodenteil zusammengesetzt ist, insbesondere der Kastendeckel 11, 11' am Boden 15, 15' über eine oder mehrere mechanische Verbindungen, z.B. als Schraubverbindung 19 und/oder Schlitzbördelung 26, festgelegt ist.

## Patentansprüche

1. Wärmetauscher (10, 20, 30, 40, 50) zum Wärmetausch zwischen einem ersten Fluid, insbesondere einer Ladeluft (3) oder einem Abgas (3), und einem zweiten Fluid, insbesondere einem Kühlmittel, aufweisend:
- einen Block (1) zur voneinander getrennten und wärmetauschenden Führung des ersten und zweiten Fluids, welcher Block (1) eine Anzahl von dem ersten Fluid durchströmbare Strömungskanäle (5) und ein die Strömungskanäle (5) aufnehmendes, von dem zweiten Fluid durchströmbares Gehäuse (7, 37, 47, 57) aufweist;
- mindestens einen Kastendeckel (11, 11'), welcher mit den Strömungskanälen (5) strömungsverbunden ist,
- einen Boden, der am Kastendeckel (11, 11') festgelegt ist und mit einer oder mit mehreren Durchgangsöffnungen (17) für die Strömungskanäle (5) versehen ist, wobei der Boden (15, 15') aus wenigstens einem ersten Bodenteil (15.1) und einem zweiten Bodenteil (15.2) zusammengesetzt ist, wobei das erste Bodenteil (15.1) eine Bodenplatte ist und das zweite Bodenteil (15.2) ein Bodenrahmenteil ist, das in einem Querschnitt im Wesentlichen L-förmig ist, **dadurch gekennzeichnet, dass**
die Bodenplatte eine sich über einen Bodenplattenrandbereich (61) erhebendes Podest (63) mit mehreren Durchgangsöffnungen (17) aufweist, und die Öffnung (65) des Bodenrahmenteils im Wesentlichen der Fläche des Podestes (63) entspricht und das Podest (63) mit den Durchgangsöffnungen aufnimmt, wobei der in der Ebene der Bodenplatte liegende Schenkel (69) des L-förmigen Querschnitts der Bodenrahmenplatte auf seiner Unterseite als Anlagefläche für den Bodenplattenrandbereich (61) dient, wobei der innere Bereich (63) der Bodenplatte passgenau auf die Öffnung (65) des Bodenrahmenteils ausgebildet ist.

2. Wärmetauscher nach Anspruch 1, **dadurch gekennzeichnet, dass** die Bodenplatte als ein inneres Bodenteil und das Bodenrahmenteil als ein äußeres Bodenteil gebildet ist, wobei das innere Bodenteil umfänglich vom äußeren Bodenteil umgeben ist.

3. Wärmetauscher nach Anspruch 1 oder 2, **dadurch gekennzeichnet, dass** die Bodenplatte flach ist.

4. Wärmetauscher nach einem der Ansprüche 1 bis 3, **dadurch gekennzeichnet, dass** die Durchgangsöffnungen (17) einreihig, zweireihig oder mehr als zweireihig gebildet sind.

5. Wärmetauscher nach einem der Ansprüche 1 bis 4, **dadurch gekennzeichnet, dass** ein Strömungskanal (5) in Form eines Flachrohres, insbesondere eine Durchgangsöffnung (17) im Wesentlichen rechteckig gebildet ist.

6. Wärmetauscher nach einem der Ansprüche 1 bis 5, **dadurch gekennzeichnet, dass** das Bodenrahmenteil in Form eines oder mehrerer Bodenrahmenteile gebildet ist.

7. Wärmetauscher nach einem der Ansprüche 1 bis 6, **dadurch gekennzeichnet, dass** ein in einer Ebene der Bodenplatte liegender Schenkel eines L-förmigen Querschnitts wenigstens eine Sicke (21, 21'), insbesondere zwei auf unterschiedlichen Seiten gebildete Sicken, aufweist.

8. Wärmetauscher nach einem der Ansprüche 1 bis 7, **dadurch gekennzeichnet, dass** eine erste Sicke (21, 21') zur Aufnahme einer Stirnseite (25, 25') des Kastendeckels (11, 11') bzw. eines Wandabschnitts (28) des Kastendeckels (11,11') ausgebildet ist.

9. Wärmetauscher nach Anspruch 8, **dadurch gekennzeichnet, dass** eine zweite Sicke zur Aufnahme eines Gehäuserandes ausgebildet ist.

10. Wärmetauscher nach einem der Ansprüche 1 bis 9, **dadurch gekennzeichnet, dass** in einem quer zur Ebene der Bodenplatte liegenden Schenkel, wenigstens ein Langloch (31), insbesondere vollumfänglich umlaufend beabstandete Langlöcher (31), vorzugsweise zur Bildung einer Bchlitzbördelung, angeordnet, insbesondere gestanzt sind.

11. Wärmetauscher nach einem der Ansprüche 1 bis 10, **dadurch gekennzeichnet, dass** das erste Bodenteil (15.1) und das zweite Bodenteil (15.2) voneinander unterschiedliche Materialien und/oder unterschiedliche Materialstärken aufweisen.

## Claims

1. A heat exchanger (10, 20, 30, 40, 50) for an exchange of heat between a first fluid, in particular charge air (3) or an exhaust gas (3), and a second fluid, in particular a coolant, having:
- a block (1) for the separate and heat-exchanging guidance of the first and second fluid, which block (1) has a number of flow ducts (5) which can be traversed by the first fluid and a housing (7, 37, 47, 57) which holds the flow ducts (5) and which can be traversed by the second fluid;
- at least one casing cover (11, 11') which is flow-connected to the flow ducts (5),
- a base which is fixed to the casing cover (11, 11') and which is provided with one or with a plurality of
passage openings (17) for the flow ducts (5), wherein the base (15, 15') is composed of at least one first base part (15.1) and a second base part (15.2), wherein the first base part (15.1) is a base plate and the second base part (15.2) is a base frame part which is substantially L-shaped in cross section, **characterised in that** the base plate has a podium (63) with a plurality of passage openings (17) which is elevated above a base plate edge region (61) and the opening (65) of the base frame part substantially corresponds to the area of the podium (63) and accepts the podium (63) with the passage openings, wherein the limb (69) of the L-shaped cross section of the base frame plate, which lies in the plane of the base plate, serves as a contact surface for the base plate edge region (61) on its lower surface, wherein the inner area (63) of the base plate is custom-fit to the opening (65) of the base frame part.

2. The heat exchanger according to claim 1, **characterised in that** the base plate is formed as an inner base part and the base frame part is formed as an outer base part, wherein the inner base part is surrounded at the periphery by the outer base part.

3. The heat exchanger according to claim 1 or 2, **characterised in that** the base plate is flat.

4. The heat exchanger according to one of claims 1 to 3, **characterised in that** the passage openings (17) are formed in one row, two rows or more than two rows.

5. The heat exchanger according to one of claims 1 to 4, **characterised in that** a flow duct (5) is formed in the manner of a flat tube, in particular, a passage opening (17) is formed so as to be substantially rectangular.

6. The heat exchanger according to one of claims 1 to 5, **characterised in that** the base frame part is formed in the form of one or more base frame parts.

7. The heat exchanger according to one of claims 1 to 6, **characterised in that** a limb, which lies in a plane of the base plate, of an L-shaped cross section has at least one bead (21, 21'), in particular two beads formed on different sides.

8. The heat exchanger according to one of claims 1 to 7, **characterised in that** a first bead (21, 21') is designed to hold an end side (25, 25') of the tank cover (11, 11') or a wall section (28) of the tank cover (11, 11').

9. The heat exchanger according to claim 8, **characterised in that** a second bead is designed to hold a housing edge.

10. The heat exchanger according to one of claims 1 to 9, **characterised in that** at least one slot (31), in particular slots (31) which are spaced apart from one another running around the entire periphery, are arranged, in particular punched, in a limb lying transversely with respect to the plane of the base plate, preferably so as to form a slot flange.

11. The heat exchanger according to one of claims 1 to 10, **characterised in that** the first base part (15.1) and the second base part (15.2) have different materials and/or different material thicknesses from one another.

## Revendications

1. Echangeur de chaleur (10, 20, 30, 40, 50) servant à l'échange de chaleur entre un premier fluide, en particulier un air de suralimentation (3) ou un gaz d'échappement (3), et un deuxième fluide, en particulier un liquide de refroidissement, ledit échangeur de chaleur présentant :
- un bloc (1) prévu pour le guidage du premier et du deuxième fluide, effectué séparément l'un de l'autre et permettant l'échange de chaleur, lequel bloc (1) présente un certain nombre de conduits d'écoulement (5) traversés par le premier fluide et présente un carter (7, 37, 47, 57) logeant les conduits d'écoulement (5) et traversé par le deuxième fluide ;
- au moins un couvercle de boîte (11, 11'), couvercle qui est relié fluidiquement aux conduits d'écoulement (5),
- un fond qui est fixé sur le couvercle (11, 11') de la boîte et qui est doté d'une ou de plusieurs ouvertures de passage (17) pour les conduits d'écoulement (5),
où le fond (15, 15') est composé au moins d'une première partie de fond (15.1) et d'une deuxième partie de fond (15.2), où la première partie (15.1) du fond est une plaque de fond et où la deuxième partie (15.2) du fond est une partie formant le cadre du fond, laquelle partie est en section pratiquement en forme de L, **caractérisé en ce que** la plaque de fond présente une plateforme surélevée (63) comportant plusieurs ouvertures de passage (17), ladite plateforme s'élevant au-dessus d'une zone de bordure (61) de la plaque de fond, et **en ce que** l'ouverture (65) de la partie formant le cadre du fond correspond pratiquement à la surface de la plateforme surélevée (63) et loge la plateforme surélevée (63) comportant les ouvertures de passage, où le côté latéral (69) de la section en forme de L de la plaque formant le cadre du fond sert, sur son dessous, de surface d'appui pour la zone de bordure (61) de la plaque de fond, ledit côté latéral se trouvant dans le plan de la plaque de fond, où la zone intérieure (63) de la plaque de fond est configurée de manière ajustée par rapport à l'ouverture (65) de la partie formant le cadre du fond.

2. Echangeur de chaleur selon la revendication 1, **caractérisé en ce que** la plaque de fond est formée comme une partie intérieure du fond et la partie formant le cadre du fond est configurée comme une partie extérieure du fond, où la partie intérieure du fond est entourée, de façon circonférentielle, par la partie extérieure du fond.

3. Echangeur de chaleur selon la revendication 1 ou 2, **caractérisé en ce que** la plaque de fond est plate.

4. Echangeur de chaleur selon l'une quelconque des revendications 1 à 3, **caractérisé en ce que** les ouvertures de passage (17) sont formées sur une rangée, sur deux rangées ou sur plus de deux rangées.

5. Echangeur de chaleur selon l'une quelconque des revendications 1 à 4, **caractérisé en ce qu'**un conduit d'écoulement (5) est configuré sous la forme d'un tube plat, une ouverture de passage (17) étant en particulier configurée en ayant une forme pratiquement rectangulaire.

6. Echangeur de chaleur selon l'une quelconque des revendications 1 à 5, **caractérisé en ce que** la partie formant le cadre du fond est configurée sous la forme d'une ou de plusieurs parties formant le cadre du fond.

7. Echangeur de chaleur selon l'une quelconque des revendications 1 à 6, **caractérisé en ce qu'**un côté latéral d'une section en forme de L présente au moins une moulure (21, 21'), en particulier deux moulures formées sur des côtés différents, ledit côté latéral se trouvant dans un plan de la plaque de fond.

8. Echangeur de chaleur selon l'une quelconque des revendications 1 à 7, **caractérisé en ce qu'**une première moulure (21, 21') est configurée pour permettre le logement d'un côté frontal (25, 25') du couvercle (11, 11') de la boîte ou d'une partie de paroi (28) du couvercle (11, 11') de la boîte.

9. Echangeur de chaleur selon la revendication 8, **caractérisé en ce qu'**une deuxième moulure est configurée pour permettre le logement d'un bord du carter.

10. Echangeur de chaleur selon l'une quelconque des revendications 1 à 9, **caractérisé en ce que**, dans un côté latéral placé de façon transversale par rapport au plan de la plaque de fond, au moins un trou oblong (31), en particulier des trous oblongs (31) espacés de façon circulaire sur la totalité de la circonférence, est ou sont disposé(s), en particulier poinçonné(s), de préférence pour la formation d'un sertissage à fentes.

11. Echangeur de chaleur selon l'une quelconque des revendications 1 à 10, **caractérisé en ce que** la première partie (15.1) du fond et la deuxième partie (15.2) du fond présentent différents matériaux et / ou différentes épaisseurs de matériau, qui diffèrent d'une partie à l'autre.
